(19) **Europäisches Patentamt**

**European Patent Office**

**Office européen des brevets**

(11) **EP 1 198 786 B1**

(12) **FASCICULE DE BREVET EUROPEEN**

(45) Date de publication et mention
de la délivrance du brevet:
**22.10.2003 Bulletin 2003/43**

(21) Numéro de dépôt: **00958591.0**

(22) Date de dépôt: **21.07.2000**

(51) Int Cl.$^7$: **G06T 11/00**

(86) Numéro de dépôt international:
**PCT/FR00/02115**

(87) Numéro de publication internationale:
**WO 01/008101 (01.02.2001 Gazette 2001/05)**

(54) **PROCEDE ET DISPOSITIF DE GESTION DE LA TRANSMISSION DE PIXELS**

VERFAHREN UND VORRICHTUNG ZUM VERWALTEN EINER PIXELÜBERTRAGUNG

METHOD AND DEVICE FOR MANAGING PIXEL TRANSMISSION

(84) Etats contractants désignés:
**AT BE CH CY DE DK ES FI FR GB GR IE IT LI LU
MC NL PT SE**

(30) Priorité: **27.07.1999 FR 9909704**

(43) Date de publication de la demande:
**24.04.2002 Bulletin 2002/17**

(73) Titulaire: **ADL Systeme S.A.**
**27950 Saint-Marcel (FR)**

(72) Inventeur: **LANET, Arnaud**
**(FR)**

(74) Mandataire: **Ballot, Paul et al**
**Cabinet Ballot**
**122, rue Edouard Vaillant**
**92593 Levallois-Perret Cedex (FR)**

(56) Documents cités:
**EP-A- 0 536 554          EP-A- 0 917 329**

• **PATENT ABSTRACTS OF JAPAN vol. 1995, no.
01, 28 février 1995 (1995-02-28) & JP 06 296210
A (RICOH CO LTD), 21 octobre 1994 (1994-10-21)**

**Description**

La présente invention concerne le domaine de la gestion d'informations graphiques, notamment sous forme de pixels exprimant l'évolution d'un tracé. Plus particulièrement, mais non exclusivement, l'invention trouve application dans le transfert de pixels à partir d'une source, tel qu'un dispositif de saisie de pixels, vers au moins un dispositif d'affichage. Un groupe de dispositifs de télé-écriture en communication interactive est un exemple typique de mise en oeuvre d'un tel transfert de pixels. Dans ce cas, il est entre autre nécessaire de gérer et de transmettre en temps réel des pixels correspondant à l'évolution d'un tracé sur la tablette du dispositif en mode d'émission, le même tracé devant être alors réalisé simultanément sur l'écran du dispositif en mode réception.

Dans de nombreuses applications, le dispositif de saisie de coordonnées est physiquement et fonctionnellement lié à un écran de visualisation pour former un écran interactif. La surface utile de l'écran de visualisation sert alors de tablette pour la saisie par un stylet, ou analogue, d'informations (tracés, écriture, etc...) ou pour la sélection de fonctions sur menus, de commandes sous forme d'icônes, etc. à partir d'un affichage sur l'écran. Dans cette configuration, des coordonnées de position saisies par le dispositif de saisie sont mis en correspondance avec des coordonnées d'affichage de l'écran de visualisation pour permettre de faire évoluer l'affichage en fonction des données saisies.

Avec ces applications qui mettent en jeux une interactivité, on recherche toujours à réduire autant que possible le temps mort entre la création d'un élément de tracé à la source d'émission et son apparition sur l'écran de visualisation à la destination. Ce temps mort a plusieurs composantes qui, étant généralement successives, se combinent de manière additive :

- le temps de détection et de réponse du dispositif de saisie de coordonnées qui convertit les déplacements d'un instrument de tracé (stylet, souris, pointeur ...) en coordonnées spatiales (rectangulaires, polaires, ou autres);
- le temps de conversion par une unité de calcul des coordonnées évolutives en une suite de données correspondant à des pixels structurés selon un protocole donné;
- le temps de transmission des données pixel sur une liaison vers l'écran de visualisation destinataire;
- le temps d'analyse des données pixels et leur conversion par le dispositif destinataire en signaux de commande exploitables par son écran de visualisation; et
- le temps de réponse de l'écran de visualisation aux signaux de commande.

Or, il s'avère que dans l'état actuel de la technique, les temps morts liés à ces composantes sont soit difficilement améliorables, soit incompressibles en raison de limites physiques fondamentales.

La composante liée à la transmission des données de pixels est très variable selon les liaisons de transfert envisagées. Elle est limitée par la bande passante de liaison qui, dans ce contexte, exprime la quantité de données qui y peut y être véhiculée par unité de temps. Cette quantité est d'autant plus grande que la bande passante est élevée.

Par ailleurs le principe de ne considérer comme un mouvement comme significatif - et donc distinct de l'état stationnaire - que s'il résulte d'un changement de position supérieur à un nombre prédéterminé de pixels est connu dans le domaine des dispositifs de saisie de tracé (cf document EP-A-536554).

Au sein d'un écran interactif, un transfert de pixels s'opère entre les moyens de calcul qui forment les données pixels à partir des coordonnées saisies et l'écran d'affichage associé. Ce transfert s'effectue sur un bus interne de l'écran interactif s'il intègre ses propres moyens de calcul, ou sur un bus externe si ces moyens sont déplacés. Dans les deux cas, le bus - dénommé ci-après bus local - peut permettre un transfert rapide des pixels, surtout s'il s'agit d'un bus parallèle.

En revanche, lorsque les pixels formés à partir du dispositif de saisie doivent être transférés vers au moins un écran de visualisation externes à ce dispositif- dénommé ci-après écran distant - une liaison rapide ne peut pas toujours être envisagée. Ainsi, pour reprendre l'exemple d'un groupe de dispositifs de télé-écriture en communication, la liaison entre les dispositifs s'effectue habituellement par le réseau téléphonique. Il s'agit là d'un liaison série à faible débit par rapport aux débits des bus informatiques.

Des liaisons pour le transfert de pixels sont également possibles par voie hertzienne ou faisceau infrarouge, qui peuvent aussi être de débit relativement faible.

Il apparaît donc qu'une utilisation plus rationnelle de la bande passante de la liaison de transfert de pixels est souhaitable, tant pour les liaisons intrinsèquement lentes que pour les liaisons rapides. En effet, même si ces dernières - par exemple le bus interne précité - ne sont pas saturées par un transfert normal de pixels, ils peuvent néanmoins bénéficier d'une économie d'utilisation de bande passante pour permettre d'offrir un plus grand confort d'utilisation ou des fonctionnalités supplémentaires.

Un objet de la présente invention est donc de prévoir un procédé et un dispositif de gestion de pixels qui permettent une utilisation plus rationnelle de la bande passante de liaison utilisée, quelque soit son contexte. Ils sont définis aux revendications 1 et 28 respectivement.

A cette fin, l'invention propose un procédé de transmission de pixels à partir d'une succession de pixels acquis en entrée exprimant l'évolution d'un tracé, caractérisé en ce que, préalablement à la transmission des pixels, on élimine sélectivement des pixels de la succession de sorte que la séparation minimale entre deux pixels successifs transmis soit supérieure à un seuil déterminé.

Ainsi, il est possible d'économiser de la bande passante pour la transmission des pixels d'un tracé en ne transmettant un pixel de ce tracé que s'il représente une évolution spatiale significative. En effet, si la séparation spatiale entre deux pixels successifs acquis en entrée est inférieure au seuil déterminé, on considérera que l'information portée par l'un de ces pixels - le dernier en l'occurrence - est trop peu significative pour justifier sa transmission.

Dans les modes de réalisation préférés, le seuil précité est calculé et exprimé en termes de pas élémentaires entre des pixels sur le plan d'affichage auquel ces pixels sont destinés. On comprendra que cette façon d'appréhender la notion de seuil déterminé dans le présent contexte peut trouver son équivalent en utilisant d'autres paramètres :

- la distance absolue entre les pixels sur un écran ou un support d'image donné (l'écran pouvant être de nature analogique comme dans le cas d'un tube à rayon cathodique) ou une page d'impression;
- la distance en termes de pas élémentaire au niveau du plan de coordonnées de saisie, celui-ci pouvant avoir un maillage différent de celui utilisé pour l'affichage. Dans ce cas, la conversion de la séparation minimale entre le plan de saisie et d'affichage n'implique que l'application d'un facteur d'échelle;
- l'intervalle de temps séparant l'acquisition des données élémentaires relatif au tracé lorsque les moyens d'acquisition fournissent des données de position à un rythme variable notamment en fonction de l'évolution du tracé ou lorsque ces moyens fonctionnent de manière asynchrone. Dans ce cas, une équivalence peut être établie entre l'intervalle précité et la séparation entre les pixels dans ledit plan d'affichage.

Par ailleurs, le tracé peut être considéré comme évoluant dans un plan bidimensionnel ou tridimensionnel. Pour des raisons de simplicité, l'exposé qui suit considérera le cas d'un espace bidimensionnel ; l'homme du métier pourra réaliser l'extrapolation de l'enseignement de l'invention à un espace tridimensionnel au besoin.

La séparation entre deux pixels peut être analysée selon plusieurs approches différentes. Par exemple, pour le cas de deux pixels successifs acquis en entrée désignés Pr et Pi et ayant respectivement les coordonnées cartésiennes (Xar, Yar) et (Xai, Yai) dans le plan image, ladite séparation Sri peut être évaluée en termes de :

- la distance absolue dans un plan de coordonnées, par exemple le plan d'affichage,

soit

$$Sri = \{(Xar - Xai)^2 + (Yar - Yai)^2\}^{1/2};$$

ou

- la séparation de l'une seulement des composantes choisie arbitrairement,

soit

$$Sri = |Xar - Xia|, \text{ soit } |Yar - Yai|;$$

ou

- en termes de séparation de l'une ou l'autre des composantes

$|Xar - Xia|$ ou $|Yar - Yai|$ en fonction de laquelle est la plus ou la moins importante.

Ainsi, dans un mode de réalisation de l'invention, on établit la position d'un pixel selon des valeurs numériques associées à des paramètres correspondant d'un système de coordonnées, la séparation minimale étant dépassée si la différence de valeurs entre deux pixels successifs pour l'un des paramètres précités est supérieure à un seuil déterminé pour ce paramètre.

De préférence, on considère les pixels dans un plan ou espace cartésien. Les paramètres sont alors les coordonnées X, Y et la séparation minimale entre deux pixels successifs Pr et Pi est dépassée si :

$$DXri = |Xar - Xai| > DXmin$$

ou

$$DYri = |Yar - Yai| > DYmin;$$

où Xar et Xai, sont respectivement les valeurs de la coordonnée X de deux pixels successifs, Yar, et Yai sont respectivement les valeurs de la coordonnée Y de deux pixels successifs, et DXmin et DYmin sont respectivement le seuil déterminé pour la coordonnée X et la coordonnée Y.

Avantageusement, la séparation minimale Smin, DXmin ou DYmin entre deux pixels successifs transmis est supérieur à n fois le pas élémentaire entre deux pixels adjacents dans le plan d'affichage, où n est un nombre entier égal ou supérieur à : 1, 2 ou 4, ou encore tout autre nombre selon l'application considérée. Plus le seuil prédéterminé Smin ou DXmin ou DYmin sera grand (ici exprimé en termes du nombre n précité), plus on réalisera des économies de bande passante pour la transmission des pixels représentant un tracé, moyennant une perte de résolution. Des études menées par la demanderesse on permis de constater qu'une économie importante de bande passante pouvait ainsi être réalisée sans perte gênante en résolution, et sans faire appel à des algorithmes complexes d'extrapolation au niveau de la réception des pixels. Des résultats excellents peuvent être obtenus en reliant simplement chaque espace entre deux pixels successifs formant un tracé continu par un segment de droite, selon des techniques connues en elles-mêmes.

De préférence, les pixels non éliminés sont transmis en paquets d'au moins un pixel, la période séparant l'acquisition du premier pixel de l'acquisition du dernier pixel du paquet étant égal ou inférieur à un seuil temporel prédéterminé. Dans ce cas, la réception des pixels s'opère par lots d'un ou de plusieurs pixels à la fois, chaque lot étant séparé par un intervalle de temps. Cet intervalle dépend du temps d'acquisition faisant l'objet de chaque paquet, ainsi que des temps de traitement tant du côté émission que du côté réception et le temps de transite des paquets. Dans des applications qui demandent un traitement en temps réel, et en particulier l'apparence d'une simultanéité entre la réalisation réelle d'un tracé sur un support sensible et l'apparition à l'affichage de ce tracé, cet intervalle de temps sera avantageusement inférieur à la persistance rétinienne. Dans ce cas, le seuil déterminé précité sera lui aussi inférieur à la persistance rétinienne. De combien ce seuil est inférieur à la persistance rétinienne dépendra, entre autres, des temps de traitement et de transmission précités. Dans l'état de la technique, on peut dire que les temps de traitement et de transmission occupent une part nettement moins importante que celle dédiée à l'acquisition du paquet de pixels, et cela sera d'autant plus vrai que la technique évoluera.

A titre indicatif, on peut établir que la persistance rétinienne est de l'ordre de 40 millisecondes. Dans certains modes de réalisation de l'invention, le seuil temporel déterminé est fixé aux alentours de cette valeur de 40 ms, ou peut être est inférieur à 30 ms, voire 20 ms.

Le nombre de pixels transmis par chaque paquet peut être variable. En effet, si on fixe une période déterminée séparant l'acquisition du premier pixel du dernier pixel du paquet, celle-ci étant tout au plus égal au seuil temporel précité, et si les pixels acquis en entrée se succèdent à un rythme constant (lors d'un tracé continu), on peut convertir cette période déterminée en termes de nombre de pixels acquis en entrée, sur la base que cette période est alors égal à : (le nombre de pixels acquis en entrée - 1) x l'intervalle de temps entre deux acquisitions de pixels. Ainsi, pour une période donnée d'acquisition de pixels on obtient un nombre maximal de pixels susceptibles de former ce paquet. Le paquet peut contenir ce nombre maximum de pixels si aucun pixel n'a été éliminé selon le critère de l'invention, ou tout nombre inférieur à ce nombre maximum en fonction des pixels qui auront été éliminés.

Dans un mode de réalisation préféré, chaque paquet de pixels correspond à des pixels formant un élément de tracé ininterrompu. De la sorte, chaque paquet contient de manière implicite l'information que tous les pixels qui s'y trouvent doivent être reliés entre eux pour reconstituer l'élément de tracé dont ils ont fait l'objet. Autrement dit, selon ce mode, il ne peut y avoir une interruption suivie d'une reprise de tracé au sein même d'un paquet de pixels transmis. Comme il apparaîtra plus clairement dans la description détaillée, cette disposition permet une gestion plus efficace des données transmises.

Avantageusement, chaque paquet de pixels est formaté en message pixels pouvant être traité de manière autonome pour la transmission et l'extraction de données à la réception. L'un des avantages de cette disposition et de permettre d'intercaler des messages comportant des données autres que des pixels entre deux paquets de pixels. Ces autres données peuvent être formatées elles aussi en paquets selon un protocole établi. L'intercalation de tels messages comportant ces autres données peut se faire même entre deux messages pixels lorsque le dernier pixel du premier de ces deux messages est à lier au premier pixel du second de ces deux messages pour exprimer un tracé continu. En effet, la transmission de messages comportant des données autres que des pixels peut s'effectuer notamment lors de l'acquisition des pixels qui constitueront le deuxième de ces deux messages pixels.

Il est notamment possible de tenir compte du fait que, comme expliqué précédemment, certains messages peuvent être plus courts que d'autres (selon les pixels éliminés) pour gérer l'intercalation de ces autres données de manière intelligente. En effet, un paquet associé à un message pixels contenant peu de pixels occupe un créneau temporel moins grand que si le message contenait un nombre plus important de pixels, et permet donc des messages d'autres données plus longs.

On peut en plus attribuer des hiérarchies de priorité pour les paquets, notamment en attribuant la plus haute priorité au paquets contenant des messages pixels afin de maintenir l'affichage sensiblement en temps réel (au niveau de la perception visuelle) d'un tracé en cours d'acquisition.

Dans le protocole mis en oeuvre dans le mode de réalisation préféré, le message pixels comporte un champ d'identification signifiant qu'il comporte des données pixels, auquel peut s'ajouter un champ nombre spécifiant le nombre de pixels contenus dans ledit message. Le champ d'identification et le champ nombre peuvent constituer une en-tête du message pixels.

Avantageusement, chaque message pixels comporte une donnée indiquant si le premier pixel dudit message doit être lié au dernier pixel d'un message pixels précédent.

Au niveau des pixels eux-mêmes au sein d'un message, chaque pixel transmis peut comporter un premier champ indiquant s'il doit être relié à un pixel précédemment transmis, un deuxième champ exprimant une première coordonnée sur ledit plan d'affichage, et un troisième champ exprimant une seconde coordonnée sur ledit plan d'affichage.

Dans ce cas, le premier champ sera avantageusement intégré à au moins un bit d'un octet destiné à exprimer une desdites première ou deuxième coordonnées.

Avantageusement, lorsque les pixels acquis en entrée sont gérés en groupes de pixels reçus successivement durant une période d'acquisition prédéterminée et dans le cas d'un premier groupe de pixels pour un tracé donné comportant le premier pixel d'un élément de début de tracé :

a) on établit initialement ledit premier pixel comme pixel de référence et les autres pixels du groupe comme pixels candidats à la sélection pour transmission,

b) on détermine, pour chaque pixel candidat successif du groupe, si la séparation dans ledit plan d'affichage entre le pixel de référence et le pixel candidat est supérieure à la distance seuil prédéterminée,

c) dans le cas où ladite séparation est inférieure à ladite distance seuil, on élimine ledit pixel candidat,

d) dans le cas ou ladite séparation n'est pas inférieure audit seuil, on sélectionne ledit pixel candidat pour la transmission et on établit ce pixel candidat sélectionné comme nouveau pixel de référence pour l'étape b), et

e) on transmet ensemble ledit premier pixel et le(s) pixel(s) candidat(s) sélectionné(s).

Avantageusement aussi, lorsque les pixels acquis en entrée sont gérés en groupes de pixels reçus successivement durant une période d'acquisition prédéterminée, et dans le cas d'un groupe de pixels faisant suite à un précédent groupe de pixels sans discontinuité dans le tracé :

a) on établit initialement le dernier pixel transmis dudit groupe précédent comme pixel de référence et les pixels du groupe faisant suite comme pixels candidats à la sélection pour transmission,

b) on détermine, pour chaque pixel candidat successif du groupe actuel, si la séparation dans ledit plan d'affichage entre le pixel de référence et le pixel candidat est supérieure à la distance seuil prédéterminée,

c) dans le cas où ladite séparation est inférieure à ladite distance seuil, on élimine ledit pixel candidat,

d) dans le cas ou ladite séparation n'est pas inférieure à ladite distance seuil, on sélectionne ledit pixel candidat pour la transmission et on établit ce pixel candidat sélectionné comme nouveau pixel de référence pour l'étape b), et

e) on transmet l'ensemble constitué du/des pixel(s) candidat(s) sélectionné(s) dudit groupe avec une indication de lier le premier pixel de l'ensemble transmis au dernier pixel du groupe précédent.

De même, lorsque les pixels acquis en entrée sont gérés par groupes de pixels reçus successivement durant une période d'acquisition prédéterminée et dans le cas d'une succession de pixels interrompue de sorte qu'un seul pixel soit acquis durant la dernière période d'acquisition ayant été interrompue, ledit seul pixel est transmis systématiquement.

Dans une application typique de l'invention, le tracé est réalisé sur un écran interactif comportant un écran de visualisation et un dispositif de saisie de coordonnées intégré audit écran, les pixels acquis en entrée étant obtenus à partir de données de position fournis par ledit dispositif de saisie de coordonnées et le ou les pixel(s) transmis est/sont reçu(s) par l'écran de visualisation.

Les pixels transmis peuvent aussi être envoyés vers au moins un terminal récepteur éloigné de la source de pixels acquis en entrée.

On peut alors envisager de faire transiter les pixels transmis vers au moins un terminal récepteur sur une liaison série, notamment une ligne téléphonique.

Le procédé peut être utilisé pour relier au moins deux dispositifs de télé-écriture en communication.

L'invention concerne également un procédé de réception de pixels transmis sélectivement selon l'une quelconque des caractéristiques précitées, comprenant les étapes de :

a) réceptionner chaque pixel transmis;

b) dans le cas d'une succession de pixels reçus, déterminer les pixels qui doivent être liés entre eux pour former un tracé continu; et

c) pour chaque pixel devant être lié, créer un segment de droite reliant ce pixel au pixel précédent dans ladite succession afin de former un tracé continu entre lesdits pixels devant être liés.

L'invention concerne également un dispositif de transmission de pixels à partir d'une succession de pixels acquis en entrée exprimant l'évolution d'un tracé, caractérisé en ce qu'il comprend :

- des moyens pour déterminer la séparation spatiale entre des pixels successifs de la succession; et
- des moyens pour éliminer sélectivement des pixels de ladite succession

de sorte que la séparation minimale entre deux pixels successifs transmis soit supérieure à un seuil déterminé.

Les caractéristiques optionnelles citées dans le contexte du procédé de transmission selon l'invention peuvent s'appliquer mutatis mutandis à ce dispositif, et ne seront pas récitées à nouveau par souci de concision.

La présente invention concerne également un dispositif de télé-écriture comportant un dispositif de transmission de pixels du type précité.

Enfin, l'invention concerne aussi un dispositif de réception de pixels transmis sélectivement selon le procédé précité, caractérisé en ce qu'il comprend :

a) des moyens pour réceptionner chaque pixel transmis;
b) des moyens pour déterminer, dans le cas d'une succession de pixels reçus, les pixels qui doivent être liés entre eux pour former un tracé continu; et
c) des moyens pour créer, pour chaque pixel devant être lié, un segment de droite reliant ce pixel au pixel précédent dans ladite succession afin de former un tracé continu entre lesdits pixels devant être liés.

L'invention sera mieux comprise et les avantages qui en découlent apparaîtront plus clairement à la lecture de la description qui suit, du mode de réalisation préféré, donnée purement à titre d'exemple non-limitatif, par référence aux dessins annexés dans lesquels :

- la figure 1 représente schématiquement deux dispositifs de télé-écriture en communication par le réseau téléphonique;
- la figure 2 montre par un schéma synoptique l'architecture interne d'un des dispositifs de télé-écriture représentés à la figure 1;
- la figure 3 illustre la relation entre un plan de coordonnées de saisie de données graphiques et un plan de coordonnées d'affichage;
- la figure 4 montre la structure des données formant un pixel selon le mode de réalisation préféré de l'invention;
- la figure 5 montre la structure d'un message pixels selon le mode de réalisation préféré de l'invention;
- la figure 6 montre le contenu des différents octets qui constituent le message pixels de la figure 5;
- la figure 7 représente la portion initiale d'un exemple de tracé réalisé sur un dispositif de la figure 1 donnant lieu à un message pixels correspondant;
- la figure 8 est un organigramme montrant les étapes d'acquisition de coordonnées de position et de leur conversion en pixels selon le mode de réalisation préféré;
- la figure 9 illustre une opération de conversion, par un processeur du dispositif de la figure 2, de coordonnés de saisie de position en données formant un pixel;
- les figures 10a et 10b sont des organigrammes montrant les opérations de sélection de pixels pour constituer un message pixels destiné à être transmis pour visualisation conformément au mode de réalisation préféré;
- la figure 11 illustre les opérations réalisées par un processeur du dispositif de la figure 2 lors de l'exécution de la procédure selon l'organigramme de la figure 10a;
- les figures 12a et 12b représentent un détail de la portion de tracé illustrée à la figure 7, montrant certaines des séparations entre pixels considérées lors de la procédure de sélection de pixels conformément à deux variantes possibles au mode de réalisation préféré;
- la figure 13 est un organigramme des opérations relatives à la transmission d'un premier message pixel;
- la figure 14 représente un graphisme composé de deux tracés séparés dont l'un comprend la portion de tracé représenté à la figure 7;
- la figure 15 est un organigramme des opérations relatives à la gestion et à la transmission d'un message pixels ne comportant qu'un seul pixel sélectionné en plus d'un pixel de référence après une interruption de saisie;
- la figure 16 est un organigramme des opérations relatives à la gestion et à la transmission d'un message pixels comportant plusieurs pixels sélectionnés en plus d'un pixel de référence après une interruption de saisie;
- la figure 17 est un organigramme des opérations relatives à l'affichage d'un message pixels qui n'est pas à lier au message pixels précédent; et
- la figure 18 est un organigramme des opérations relatives à l'affichage d'un message pixels qui est à lier à un message précédent.

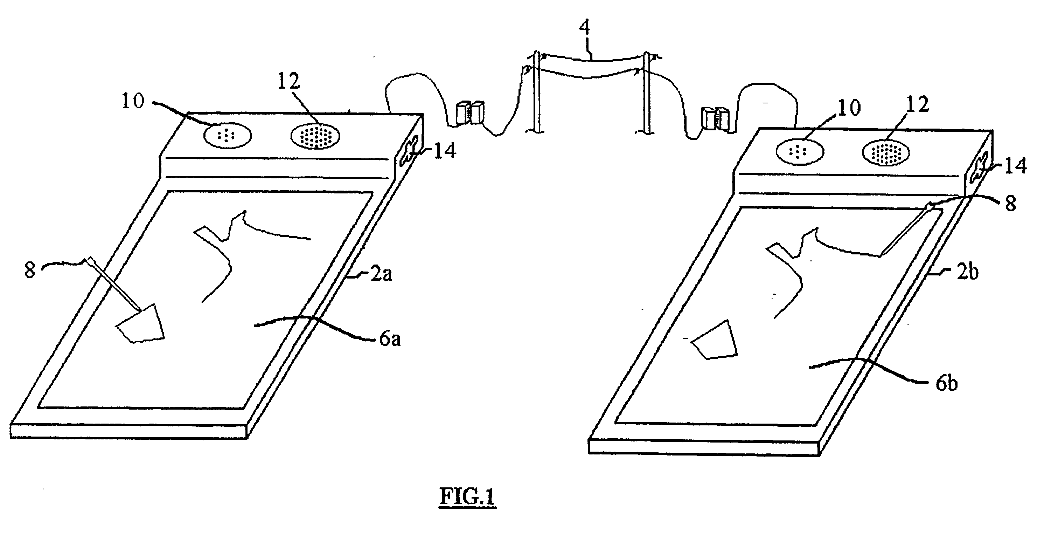

La figure 1 représente de manière schématique un exemple de réalisation de l'invention dans le contexte de la télé-écriture. La télé-écriture est un moyen connu en lui-même qui permet de transmettre et de recevoir en direct des tracés effectués sur des écrans de terminaux interconnectés.

L'exemple illustré représente deux terminaux de télé-écriture 2a, 2b en liaison par le réseau téléphonique publique 4. Chaque terminal comporte une dalle 6a, 6b formant un écran interactif, celle-ci ayant la double fonction de surface active d'un dispositif de saisie dé coordonnées et d'écran de visualisation. Il existe diverses technologies de réalisation de tels écrans interactifs. Dans l'exemple, l'écran interactif (désigné génériquement par la référence 6) est réalisé à partir d'un écran d'affichage plat à cristaux liquides recouvert d'une membrane tactile. Une pression appliquée par un stylet 8 ou analogue sur un point quelconque de la membrane est localisée par des capteurs résistifs ou capacitifs au sein de la membrane pour en extraire une coordonnée précise du point de contact selon un plan de coordonnées X, Y. Ce type d'écran interactif est généralement connu sous le terme de dalle sensitive (désigné ci-après "dalle").

Une électronique de commande - décrite plus loin - permet de visualiser un tracé évoluant dans le temps et sur la surface de la dalle, 6a, 6b en corrélation avec le contact d'un stylet 8 sur cette dalle, à la manière d'un tracé classique sur une feuille.

Un tracé effectué sur l'une des dalles 6a apparaît à la fois sur celle-ci et sur la dalle 6b du dispositif relié 2b, et inversement. Avec des dispositifs de télé-écriture permettant un fonctionnement en mode duplex complet, il est possible de faire apparaître simultanément sur l'une quelconque des dalles 6a et 6b à la fois l'évolution d'un tracé formé directement sur celle-ci par un stylet 8 et l'évolution d'un tracé provenant en direct d'un autre terminal relié.

Les dispositifs de télé-écriture permettent également des fonctions de téléphonie classiques, c'est-à-dire l'échange de données vocales, auxquelles peuvent s'ajouter, selon leur degré d'évolution, des possibilités de communication de données électroniques autres que celles relatives à un tracé. Par exemple, les terminaux 2a, 2b représentés comprennent chacun un microphone 10 et un haut-parleur 12 pour la téléphonie classique et un lecteur de disquette intégré 14.

Grâce à divers ports de connexion et de moyens internes de stockage et de traitement de données, les terminaux représentés peuvent aussi constituer un véritable noeud de communication avec divers équipements informatiques, notamment des ordinateurs personnels, agendas électroniques, appareils photos électroniques, équipement médicaux ou scientifiques etc. Il est alors possible d'échanger des graphismes constitués d'images ou de combinaison de textes et d'images, avec superposition de tracés au moyen du stylet 8, par exemple pour annoter un document ou pour modifier une image.

Pour que toutes ces possibilités soient réellement utiles, il est important qu'elles puissent être exploitées en temps réel. Dans ce contexte, la notion de temps réel sera comprise comme signifiant une apparente simultanéité ou quasi-simultanéité entre la création d'un contenu visuel sur l'écran d'un dispositif émetteur et l'apparition de ce même contenu sur l'écran du ou des dispositif(s) récepteur(s). Outre les tracés sur écran, le contenu visuel pourra être constitué par l'évolution d'un fichier image ou texte, par exemple pour une présentation animée, ou pour simuler des pages qui tournent.

Cette exigence de temps réel impose des contraintes au niveau des ressources des terminaux et des moyens de liaison entre la source de données pixels et le ou les écrans qui les affichent.

En ce qui concerne les ressources des terminaux, la gestion de l'information en temps réel fait appel à des moyens de calcul importants, car il est nécessaire de traiter non seulement les aspects du fonctionnement liés aux applications proprement dites (notamment la gestion de la dalle sensitive), mais également des entrées et sorties vis-à-vis des différentes interfaces éventuellement connectées, sans compter les tâches liées à la communication avec le ou les autres terminaux en ligne.

Dans cette optique, la demanderesse a proposé dans la demande de brevet français FR-A-2 770 952 un terminal pour la télé-écriture permettant une optimisation du traitement des données en temps réel grâce à une architecture spécifiquement adaptée basée sur deux ou trois processeurs selon les modes de réalisations envisagés, effectuant des tâches en concomitance.

Pour l'exposé de l'invention qui suit, les exemples de mise oeuvre seront basés sur un tel terminal. Aussi, on considéra le contenu de la demande FR-A-2 770 952 comme étant incorporé dans son intégralité à la présente demande par référence. Ceci s'applique notamment pour tous les aspects de communication entre des dispositifs : protocoles d'appel, d'acquittement de commandes, de réception, de gestion des différentes phases de la communication etc. Cependant, pour faciliter la lecture de ce qui suit, les aspects de la demande FR-A-2 770 952 utiles à la compréhension seront maintenant rappelés sans pour autant limiter la portée de l'invention, celle-ci trouvant des applications dans tous les domaines qui font appel à une gestion de pixels.

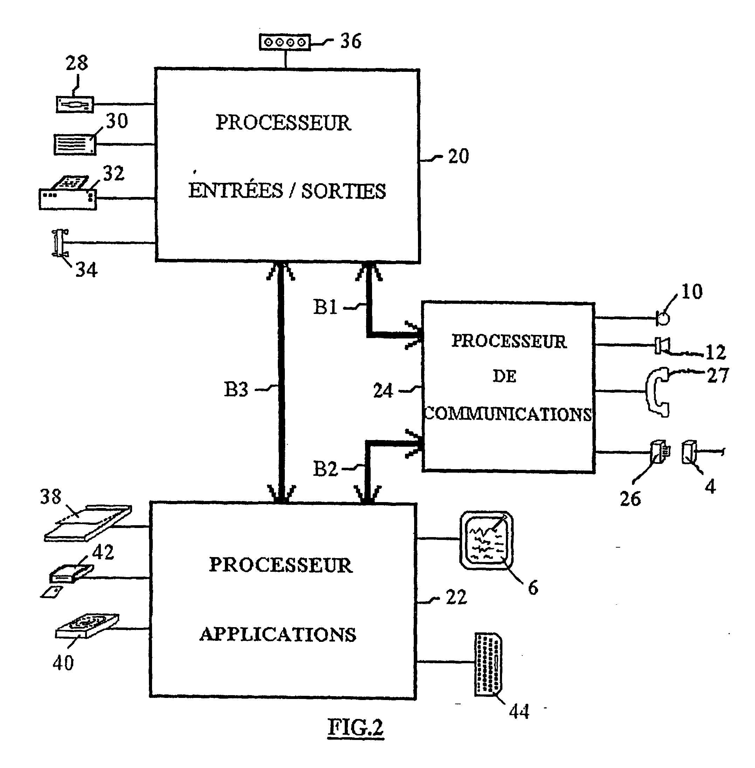

La figure 2 est un schéma de principe de l'architecture générale d'un dispositif terminal de télé-écriture selon un mode de réalisation de la demande FR-A-2 770 952, basé sur trois processeurs.

L'ensemble des tâches, hormis celles liées à la communication vis-à-vis d'une ligne téléphonique, est géré par deux processeurs : un premier processeur 20 dédié principalement à la gestion des ports d'entrées et de sorties et un deuxième processeur 22 dédié principalement à la gestion des applications, y compris le fonctionnement de la dalle sensitive 6.

Ces deux processeurs 20 et 22 sont reliés séparément par des bus bidirectionnels respectifs B1 et B2 à un troisième processeur 24 qui gère les flux de données vis-à-vis du réseau téléphonique commuté (RTC) 4 ou des lignes numériques (par exemple du type RNIS). Ce troisième processeur 24 (également dénommé processeur de communications) intègre également des fonctions de gestion liées plus particulièrement aux applications vocales de terminal, notamment en ce qui concerne la téléphonie. A ce titre, il comporte des interfaces pour le microphone 10 et le haut-parleur 12, ainsi qu'un combiné téléphonique 27 assurant la liaison avec le réseau 4 par l'intermédiaire d'une prise 26.

Par ailleurs, les premier et deuxième processeurs 20 et 22 sont reliés directement l'un avec l'autre par un troisième bus bidirectionnel B3.

Ainsi, l'ensemble des trois bus B1, B2 et B3 permet à l'un quelconque des trois processeurs 20, 22 et 24 de communiquer des données dans les deux sens directement avec n'importe quel autre processeur.

Dans l'exemple, le premier processeur 20 (également dénommé processeur entrées/sorties) gère les flux de données vis-à-vis d'un lecteur externe de disquettes 28, d'un disque dur 30 (intégré ou externe), d'une imprimante 32 et d'une liaison série 34. Il assure également la présentation de l'état des différents dispositifs sous contrôle par une console de voyants lumineux 36.

Le deuxième processeur 22 (également dénommé processeur applications) gère non seulement la dalle sensitive 6, mais également des modules externes ou internes qui font appel à des traitements par pixels. Ainsi, le processeur applications 22 assure ici le fonctionnement d'un scanner 38 et d'un lecteur d'empreintes digitales 40. Pour des raisons de commodité, le processeur applications 22 gère également un lecteur de carte de transaction électronique 42 et un clavier 44, celui-ci pouvant être sous forme de clavier tactile intégré à la dalle sensitive 6.

Le fonctionnement en mode indépendant des trois processeurs 20, 22 et 24 permet l'exécution en parallèle de plusieurs tâches en temps réel, d'où il en ressort une utilisation optimale des flux de données sur le réseau téléphonique 4.

Cependant, les différentes possibilités de fonctionnement du dispositif terminal 2 en temps réel sont subordonnées à la capacité du réseau téléphonique. En effet, une ligne téléphonique, même numérique, a une bande passante (paramètre qui exprime ici le débit de bits numériques) très inférieure à celle d'un bus de transmission de données utilisé en informatique. A titre indicatif, une ligne téléphonique numérique du type RNIS est actuellement limitée à des débits compris entre 56 et 64 kbits/seconde, alors que les bus couramment utilisés en informatique permettent de débits au-delà de 100 Mega-octets/seconde.

Aussi, les conditions d'utilisation d'un dispositif de transmission de données correspondant à des pixels, par exemple celui décrit dans la demande FR-A-2 2770 952, peuvent bénéficier de moyens conformes à la présente invention permettant de diminuer la quantité de données à véhiculer sur une ligne de transmission telle qu'une ligne téléphonique sans perte sensible de la qualité des informations transmises.

Un exemple de tels moyens sera maintenant décrit selon un mode de réalisation préféré de l'invention. Dans ce mémoire, on comprendra que les aspects exposés en termes de procédé peuvent être lus également en termes de moyens adaptés pour exécuter ce procédé. De même, les aspects de la description exposés en termes de moyens (matériels ou informatiques) peuvent être lus également en termes d'actions produites par ces moyens.

Dans ce mode de réalisation préféré, on considérera le cas de deux terminaux de télé- ' écriture 2a, 2b en communication, avec transfert de données représentant des pixels d'un tracé sur la dalle sensitive 6 d'un terminal (terminal émetteur) 2a vers l'autre terminal (terminal récepteur) 2b. L'homme du métier pourra aisément extrapoler les enseignements de ce mode de réalisation préféré à d'autres cas, notamment lorsque plus de deux terminaux sont interconnectés, et/ou lorsque deux terminaux au plus transmettent chacun des pixels correspondant à des tracés respectifs.

Comme il sera expliqué de manière détaillée, le terminal émetteur 2a transmettra au terminal récepteur 2b, conformément à la présente invention, un pixel relatif au tracé seulement si ce dernier représente une évolution, en termes de positionnement, jugée significative par rapport à un pixel précédent déjà transmis ou destiné à être transmis.

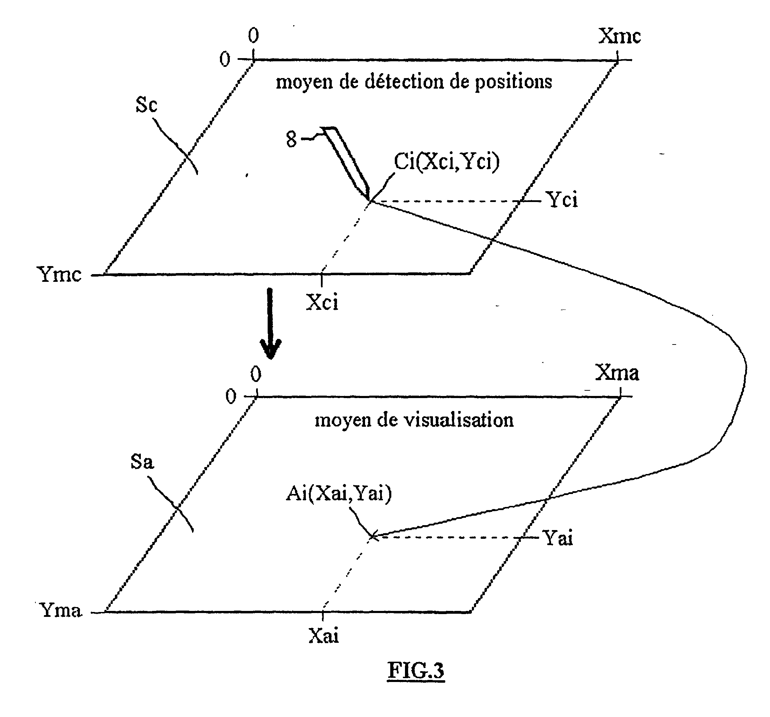

Afin de mieux comprendre les notions de tracé, de pixel et de position dans le contexte de l'exemple donné, on se référera à la figure 3 qui représente schématiquement les plans de coordonnées concernés par la saisie et la présentation sur écran des données relatives à un tracé.

On rappel ici qu'une dalle sensitive 6 est constituée par un écran d'affichage, par exemple un écran à cristaux liquides, sur laquelle est apposé un capteur de position, telle qu'un dispositif à membrane capacitive transparente. Ces capteurs de position, qui sont largement connus de l'homme du métier, comprennent généralement des moyens de mesure de différences de capacité ou de résistance entre des points repères de la membrane, créées par la pression d'un stylet, pour permettre d'exprimer la position du stylet relativement une grille de coordonnées. Le passage du stylet 8 dans le champs des moyens de mesure permet de repérer à la fois la position instantanée du stylet et l'évolution de sa position dans cette grille de coordonnées.

On remarque que l'écran d'affichage positionne également les pixels affichés relativement à un système de coordonnées qui est ici établi par des électrodes croisées qui permettent d'adresser des points d'affichage. Cependant, les systèmes de coordonnées utilisés pour le capteur de position et pour l'écran d'affichage n'ont pas forcément la même résolution.

Dans la figure 3, la dalle sensitive 6 est décomposée en deux plans de coordonnées cartésiens (rectangulaires) Sc et Sa ayant chacun la même superficie active (égale à la surface utile de la dalle) et servant respectivement de système de repère pour la détection de la position du stylet 8 (c'est-à-dire pour le capteur) et pour l'affichage des pixels d'un tracé.

Chacun des plans Sc et Sa comporte son propre système d'axes orthogonaux X et Y pour définir ses coordonnées respectives.

On désignera par convention $Ci(Xci, Yci)$ les coordonnées du stylet 8 relativement aux système de coordonnées du capteur, où i est un entier qui désigne le rang de la coordonnée dans une suite de coordonnées saisies.

De même, on désignera $Ai (Xai, Yai)$ les coordonnées d'un pixel Pi sur l'écran d'affichage se rapprochant au plus des coordonnées $Ci(Xci, Yci)$ précitées.

Pour obtenir une bonne corrélation entre le positionnement réel du stylet 8 et l'emplacement du pixel affiché correspondant à ce positionnement - ce qui donne l'effet que le stylet se déplace sur une feuille de papier - le capteur de position doit avoir une définition maximale égale ou supérieure à celle de l'écran de visualisation.

De la sorte, la visualisation sur écran d'un tracé nécessite de réaliser une conversion de coordonnées à partir des coordonnées Ci(Xci, Yci) vers les coordonnées Ai(Xai, Yai) de l'écran d'affichage. La méthode de conversion à appliquer est en elle-même connue, et ne sera résumée ici qu'à titre de rappel.
Soient (cf. figure 3):

Xma la coordonnée X maximale de l'écran de visualisation,
Yma la coordonnée Y maximale de l'écran de visualisation,
Xmc la coordonné X maximale du capteur de position; et
Ymc la coordonnée Y maximale du capteur de position.

On obtient alors les coordonnées Ai (Xai,Yai) permettant l'affichage de la position du capteur par les formules suivantes :

$$Xai = Xci.Xma/Xmc$$

et

$$Yai = Yci.Yma/Ymc.$$

Un tracé étant constitué par une suite de pixels consécutifs, il convient d'effectuer des opérations successives de détection de position du stylet 8 et d'affichage du pixel correspondant sur l'écran à une fréquence régie par les horloges internes de l'électronique de commande. La fréquence de ces opérations (désignée ci-après la fréquence d'acquisition de pixel ou simplement fréquence d'acquisition) dépend de divers paramètres, dont :

- le temps de réponse du capteur de position,
- le temps de réponse de l'écran d'affichage (y compris sa rémanence),
- le temps de réponse de l'électronique de commande de la dalle sensitive 6 et du processeur où s'opère les opérations de conversion de coordonnées, et
- les critères d'utilisation : vitesse maximal du stylet envisagée, précision souhaitée du suivie de tracé, évaluation de la persistance visuelle, etc...).

Lors d'un déplacement continu du stylet 8 sur le capteur de position, celui-ci fournit une succession ininterrompue de coordonnées Ci(Xci, Yci). Suivant la vitesse de déplacement du stylet 8 sur le plan du capteur, et de la fréquence d'acquisition, deux acquisitions successives Ci(Xci, Yci) et Ci+1(Xci+1, Yci+1) peuvent produire deux pixels respectifs Pi et Pi+1 qui ne sont pas adjacents sur l'écran de visualisation, donnant ainsi un effet de ligne pointillée.

Afin d'obtenir une représentation continue de la ligne, il est donc nécessaire de réaliser une liaison entre les deux points successifs non-adjacents. La liaison entre ces deux pixels Pi et Pi+1 est alors formée par l'insertion d'une section de droite les reliant. Cette opération est désignée ci-après "routine de liaison de pixels" ou par abréviation "routine de liaison".
Cette routine requiert le calcul des coordonnées X et Y de chaque point de visualisation formant le segment de droite afin de visualiser celui-ci. Le calcul d'un segment de droite est connu de l'homme du métier et ne sera donné ici que sommairement à titre de rappel. Soient :

Xa0 la coordonnée X pour l'affichage de la première acquisition,
Ya0 la coordonnée Y pour l'affichage de la première acquisition,
Xap la coordonnée X pour l'affichage de la deuxième acquisition, et
Yap la coordonnée Y pour l'affichage de la deuxième acquisition;
Chaque coordonnée des points intermédiaires d'affichage est alors donnée par les équations suivantes :

$$Ya(j) = [(Yap - Ya0)/( Xap - Xa0)].Xa(j) ;$$

où Xa(j) représente l'abscisse du point intermédiaire et Ya(j) son ordonnée correspondante. Ce calcul est répété pour tous les points intermédiaires j, la variable j étant incrémentée d'une unité (correspondant au passage au pixel suivant dans la droite en cours de calcul).
Lorsque j = 0, alors Xa(1) = Xa0 + 1 et le calcul se termine lorsque Xa(j) = Xap.
En outre, comme il sera expliqué plus loin, le capteur de position fournit un signal de contact CS indiquant si le stylet 8 est en contact ou non avec la dalle sensitive. Dans l'exemple, ce signal CS est à l'état logique 1 lorsque le stylet 8 et en contact et à l'état logique 0 dans le cas contraire.
On comprendra alors que l'affichage sur écran de la position du stylet 8 sur la dalle sensitive peut présenter deux situations à un moment donné :

i) l'affichage d'un tracé continu (ligne droite ou courbe sans interruption) commençant à partir de l'endroit de la première mise en contact du stylet 8 sur la dalle sensitive. Dans ce cas, le capteur transmet une succession de points au rythme des acquisitions (fixé par la fréquence d'acquisition), chacune sous forme de coordonnées Ci(Xci, Yci) avec le signal de contact CS continuellement à l'état 1. Ce signal retourne à l'état 0 à la fin du tracé continu, lorsque le stylet 8 est levé, et après la dernière acquisition de coordonnées relative au tracé;

ii) l'affichage uniquement de la position du stylet 8 si celui-ci effectue une action dite "toucher-lever" (par exemple pour pointer à un point de l'affichage sur l'écran). Dans ce cas, le capteur ne transmet qu'une seule paire de coordonnées Ci(Xci, Yci) : celle du point de contact, avec le signal de contact CS maintenu à l'état 0.

Chaque pixel Pi transmis vers l'écran d'affichage est alors défini par les trois champs suivants :

- une donnée, dénommée ci-après "indicateur de liaison" BL, précisant si la coordonnée d'affichage Ai (Xia, Yia) du pixel Pi doit être liée à celle Pi-1 transmise juste avant. L'indicateur de liaison BL est obtenu directement à partir du signal de contact CS.
- la coordonnée Xai,
- la coordonnée Yai,

L'ensemble de ces trois champs, qui définit la position d'un pixel dans le tracé effectué par le stylet 8 et son contexte positionnel, sera globalement désigné "donnée de pixel" ou "pixel" par abréviation, le terme pixel pouvant désigner à la fois les données qui la constitue et sa représentation visuelle sur l'écran.

Dans l'exemple, le paramétrage du système de la dalle sensitive 6 est comme suit :

- intervalle entre deux acquisitions de coordonnées : 1 ms,
    (soit une fréquence d'acquisition de 1 KHz);
- résolution du capteur de position : 1024 incréments unitaires horizontaux (coordonnées Xc) et 1024 incréments unitaires verticaux (coordonnées Yc);
- définition de l'écran de visualisation (affichage couleur par technologie des cristaux liquides) : 1024 pixels par ligne (coordonnées Xa) et 768 pixels par colonne (coordonnées Ya).

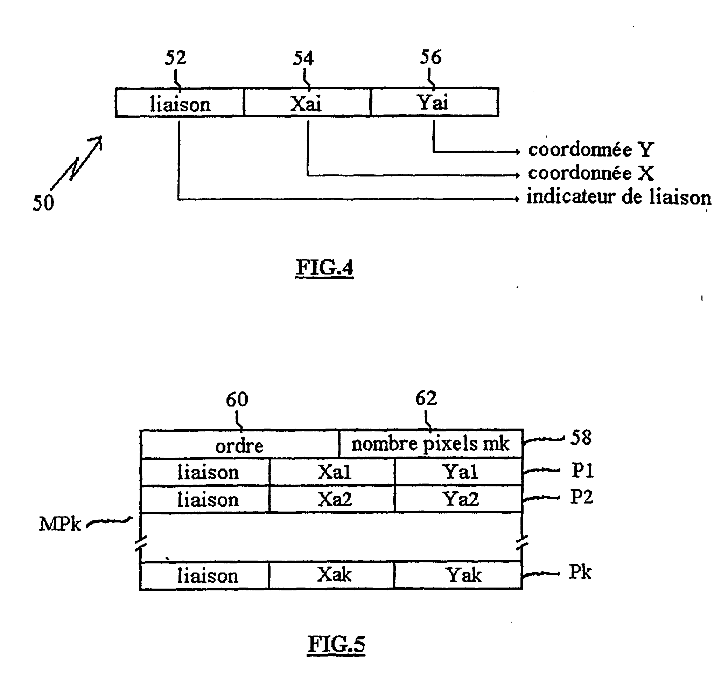

La structure d'une donnée de pixel utilisée dans l'exemple est représentée schématiquement à la figure 4.

Dans l'exemple de la figure 4, les trois champs précités, qui ensemble constituent un pixel, apparaissent de manière séquentielle, en commençant par le premier champ 52 qui contient l'indicateur de liaison. Etant du type oui/non, l'information portée par ce premier champ 52 est exprimée par un seul bit binaire, identifié par la suite comme bit BL. Par convention, on établi que le bit BL à l'état 1 (BL=1) indique que le pixel associé à ce bit doit être lié au pixel précédent par un segment de droite au niveau de l'affichage, alors que le bit BL à l'état 0 (BL=0) indique que le pixel associé ne doit pas être relié au pixel précédent. Autrement dit, l'état BL=0 marque un point de discontinuité dans un tracé : le point de terminaison d'un tracé est alors localisé au pixel précédent et le point de départ d'un nouveau tracé est localisé au pixel comportant ce bit BL=0 dans son champ 52.

Le deuxième champ 54 définit la coordonnée Xai du pixel Pi en termes du nombre d'unités élémentaires - c'est à dire le nombre de pixels consécutifs le long de l'axe X d'affichage à partir du point d'origine 0, 0. Il comporte une série de bits formant un nombre binaire ix correspondant à ce nombre d'unités. Dans l'exemple, ce nombre ix a une valeur dans la plage $0 \leq ix < 1024$.

De même, le troisième champ 56 définit la coordonnée Yai du pixel Pi en termes du nombre d'unités élémentaires - c'est à dire le nombre de pixels consécutifs le long de l'axe Y d'affichage à partir du point d'origine 0, 0. Il comporte une série de bits formant un nombre binaire iy correspondant à ce nombre d'unités. Dans l'exemple, ce nombre iy a une valeur dans la plage $0 \leq iy < 768$.

Dans l'exemple, on réserve deux octets pour chacun des champs 54 et 56.

Pour des raisons pratiques, le premier champ 52 contenant le bit unique BL d'indicateur de liaison est intégré au deuxième champ 54. Plus particulièrement, l'emplacement du dernier bit du deuxième champ 54 (bit de poids le plus fort de l'octet ayant le poids le plus fort) est réservé au bit BL indicateur de liaison.

Cette disposition est avantageuse car les différentes unités de traitement de données intervenant dans une chaîne de gestion et transmission de données utilisent l'octet comme élément de base indivisible. Or, le nombre de bits nécessaires pour exprimer la valeur de coordonnées X la plus élevée Xma, à savoir le nombre 1023, s'exprime sur 10 bits. Il est donc nécessaire d'allouer deux octets au deuxième champ 54 de la coordonnée X bien que les bits de poids fort de l'octet de poids fort ne soient pas utilisés pour représenter cette coordonnée. En donnant un rôle à l'un de bits de poids fort, on évite alors d'ajouter à la donnée pixel 50 un octet supplémentaire ne servant qu'à contenir l'indicateur de liaison BL.

On remarquera que la coordonnée Y devant exprimer 768 valeurs possibles nécessite que son champ 56 comporte également deux octets, un seul octet étant limité à 256 valeurs différentes. De la sorte, il aurait été tout aussi possible de réserver l'un de bits de poids fort du mot de poids le plus fort de ce troisième champ pour le premier champ.

Les pixels Pi sont transmis en groupes de pixels sélectionnés, chaque groupe constituant un message pixels MPk. L'indice k est un entier désignant le rang du message pixels dans une suite de messages pixels, en commençant par k = 1. Conformément à la présente invention, le nombre de pixels sélectionnés contenus dans un message pixels MPk est variable, comme il sera expliqué plus loin. Chaque message pixels MPk est géré de manière autonome, en ce sens qu'il peut être traité dans une chaîne de transmission comme un paquet de la même manière qu'un autre message échangé sur une ligne de transmission de données (message de commande, bloc de données de sources différentes, message d'acquittement, etc...).

On retiendra à ce stade que tous les pixels P d'un même message pixels MPk sont destinés à être reliés entre eux. Autrement dit, les pixels d'un même message pixels MPk correspondent à un élément de tracé ininterrompu.

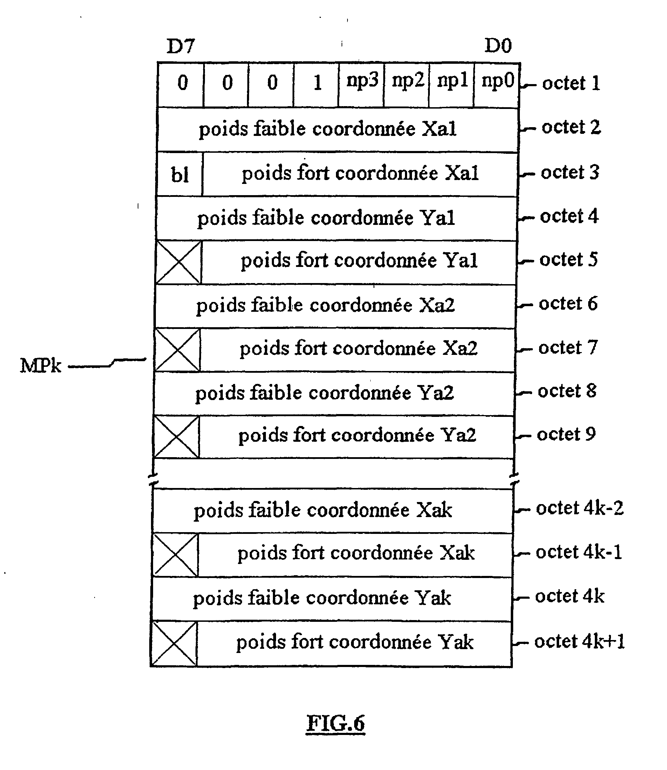

La structure d'un message pixels MPk est représentée à la figure 5. Le message comporte ici mk pixels, chaque pixel ayant la structure décrite par référence à la figure 4. De manière générale, le nombre de pixels dans un message pixels MPk est désigné par mk.

Le message pixels MPk comporte un en-tête 58 qui précède les données correspondant aux mk pixels. Cet en-tête 58 comporte deux champs:

- un champ "ordre" 60 indiquant que le message contient des pixels à visualiser, et
- un champ nombre 62 indiquant le nombre mk de pixels contenus dans le message pixels MPk.

Dans l'exemple, il est préétabli que le nombre mk de pixels contenu dans un message pixels ne peut dépasser 16. Par ailleurs, afin d'obtenir une rapidité d'identification du message possédant les informations pixels, celui-ci comporte un en-tête particulier de 4 bits assurant ainsi un traitement immédiat par le protocole d'identification de messages.

Les données correspondant aux pixels suivent immédiatement après l'en-tête 58 .

La figure 6 montre de manière détaillée la constitution du message pixels tel que schématisé à la figure 5.

Dans cette figure, le message pixels MPk est représenté sous forme de tableau, chaque ligne correspondant à un octet. Les huit bits qui constituent chaque octet, désignés D0, D1, D3, ..., D7, sont repérés sur des colonnes respectives du tableau, D0 étant le bit de poids le plus faible et D7 le bit de poids le plus fort. Cependant, pour des raisons de clarté, seulement les bits mentionnés spécifiquement dans ce qui suit sont ainsi identifiables sur ce tableau.

On notera que la désignation de bits par D0-D7 s'applique lorsque l'on se réfère de manière générique à des bits en tant qu'emplacements respectifs dans un octet quelconque ; les éléments de données binaires spécifiques contenues à des emplacements D0-D7 donnés d'un octet sont identifiés en tant que bits par l'appellation qui leur est propre.

La séquence de transmission des octets se suit de haut en bas du tableau. Dans le cas d'une transmission en série - par exemple sur le réseau téléphonique 4 - les bits de chaque octet se succédant de droite à gauche (D0 suivi de D1, ....)

Les quatre premiers bits transmis np0, np1, np2, np3 (correspondant donc aux emplacements respectifs D0-D3) du premier octet du message pixels MPk expriment le nombre mk de pixels P dans ce message selon une logique positive, la valeur maximale (16) étant indiquée par tous les bits np0-np3 positionnés à l'état 1.

Les quatre derniers emplacements de bits D4-D7 de poids fort du premier octet sont occupés par le profil binaire "0001" comme indiqué. Ce profil est fixé arbitrairement pour signifier, dans le protocole de l'exemple, que le message contient des données de pixel. Ainsi, ce même profil apparaîtra systématiquement au même endroit pour chaque message pixels MPk.

Le deuxième octet est l'octet de poids faible de la valeur de la coordonnée Xa1 du premier pixel. Il est suivi immédiatement de l'octet de poids fort de cette valeur de coordonnée (troisième octet), permettant d'exprimer cette valeur sur deux octets correspondant au champ 54.

Comme expliqué plus haut, la valeur maximale de la coordonnée Xam peut s'exprimer sans avoir à utiliser le dernier bit D7 de l'octet du poids le plus fort. On se sert ainsi de ce bit comme emplacement pour le bit indicateur de liaison BL.

Le quatrième octet et le cinquième octet du message expriment ensemble la valeur de la coordonnée Ya1 du premier pixel P1, étant respectivement les octets de poids faible et de poids fort de cette valeur, et constituent ainsi le troisième champ 56 de ce pixel P1.

Le deuxième pixel P2 du message occupe les quatre octets suivants (sixième au neuvième octets) selon le même schéma que pour l'occupation des quatre octets (deuxième au cinquième octets) par le premier pixel P1.

Toutefois, étant préalablement établi que tous les pixels sélectionnés Pi d'un même message se suivent par enchaînement, on comprendra que le deuxième pixel P2 est nécessairement lié au premier pixel PI. De la sorte, il n'est pas nécessaire que ce deuxième pixel P2 contienne un indicateur de liaison positionné à l'état BL=1, l'information que porterait cet indicateur étant déjà implicitement donnée. Aussi, l'emplacement normalement destiné au premier champ 52 d'indicateur de liaison pour ce deuxième pixel, c'est-à-dire le bit à la position D7 du cinquième octet, est à l'état indifférent. Cet état indifférent est indiqué par une croix.

Le troisième pixel P3 du message a la même structure que le deuxième pixel P2 et succède directement à celui-ci, occupant les dixième au treizième octets. Les autres pixels P3, ..., Pmk du message se succèdent ainsi jusqu'au dernier pixel Pmk, le message se terminant par l'octet de poids fort de coordonnée Yam de ce pixel.

Pour les mêmes raisons que données dans le cadre du deuxième pixel P2, les indicateurs de liaison BL de tous les pixels P2, P3, ..., Pmk du message pixels MPk succédant au premier pixel P1 sont à l'état indifférent.

## A. Sélection de pixels, élaboration et transmission de messages pixels.

On décrira maintenant les opérations de traitement des pixels permettant de sélectionner le ou les pixel(s) destiné(s) à constituer un tel message pixels MPk à partir d'une succession de données de positions fournies par le capteur de positions associé à la dalle sensitive 6.

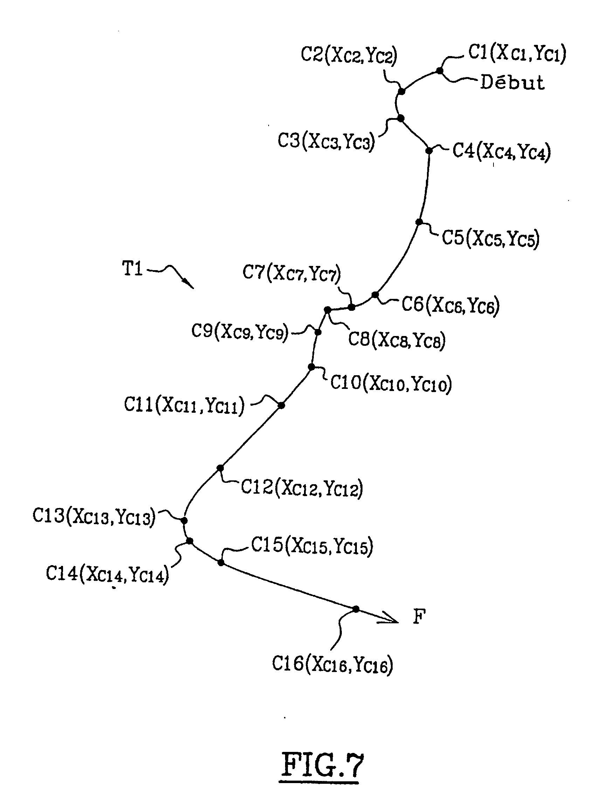

Cette description est illustrée par un exemple de portion de tracé T1 représentée à la figure 7.

La portion de tracé T1 correspond ici à un début de tracé, c'est-à-dire qu'elle prend départ à une position C1(Xc1, Yc1) de premier contact du stylet 8 avec la dalle sensitive 6 succédant à une absence de contact. Dans un tel cas, le signal de contact stylet CS émis par la dalle sensitive présente une transition de l'état de 0 à l'état 1 (pour une logique positive) au moment de contact du stylet à la position C1 de la dalle.

La portion de tracé T1 est réalisée en déplaçant le stylet 8 sur la dalle sensitive 6 sans perte de contact. Le signal de contact stylet CS demeure alors à l'état 1 durant toute la période de cette portion de tracé.

Comme expliqué précédemment, l'électronique de commande interne de la dalle sensitive 6 échantillonne la position du stylet 8 à intervalles réguliers et transmet, à chaque échantillonnage, les coordonnées instantanées Ci(Xci, Yci) du stylet. On remarque que bien que l'intervalle de temps entre l'échantillonnage de deux points de coordonnées successives est toujours le même, la distance entre deux coordonnées successives Ci(Xci, Yci) et Ci+1(Xci+1, Yci+1) du tracé n'est pas uniforme, car elle dépend d'une part de la vitesse de déplacement du stylet 8, laquelle peut varier lors du tracé, et d'autre part du parcours du tracé entre ces deux points.

Dans l'exemple, on définit la distance entre deux points quelconques respectivement de coordonnées Cp(Xcp, Ycp) et Cq(Xcq, Ycq), ou p et q sont des entiers avec p ≠ q, comme la longueur de la droite reliant ces deux coordonnées.

Les coordonnées successives ainsi détectées C1, C2, C3, ....lors d'un tracé sont gérées par blocs successifs, chaque bloc comprenant un nombre prédéterminé de coordonnées successives. Ce nombre, égal à 16 dans l'exemple, correspond à une période d'acquisition de bloc de données Tab qui ne dépasse pas sensiblement la durée de la persistance rétinienne, soit de l'ordre de 20 ms. Les raisons de ce choix sont liées au fait que les informations obtenues à partir des données de coordonnées d'un bloc sont transmises ensemble dans le message pixels correspondant. Ceci implique un décalage dans le temps entre la détection de la première coordonnée du bloc et l'affichage sur écran du premier pixel sélectionné du message pixels correspondant à ce bloc. Ce temps est au moins égal à la période d'acquisition du bloc Tab. Ainsi, en limitant ce temps autour de la durée de la persistance rétinienne, l'effet de décalage sur la dalle sensitive 6 entre le moment instantané de la position du stylet 8 et l'extrémité instantanée du tracé affiché correspondant ne sera guère perceptible. Cette considération vaut aussi bien pour les messages pixels transmis directement à l'écran intégré à la dalle sensitive 6 sur laquelle se déplace le stylet 8 que pour les messages pixels transmis vers un écran ou plusieurs écrans distants.

On décrira maintenant l'ensemble du procédé et des moyens de traitement des informations de coordonnées et de l'affichage sur écran de pixels à partir de celles-ci. La description sera donnée pour les différents cas de figure de réalisation d'un tracé sur une dalle sensitive.

## A1. Début de tracé : élaboration du premier message pixels MP1.

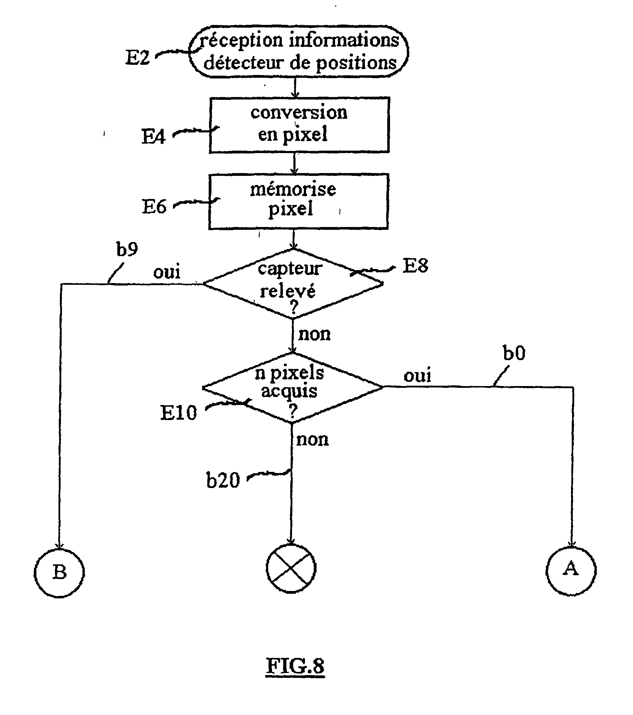

Ce cas est illustré par la portion de tracé T1 représentée à la figure 7 et les opérations seront décrites par référence aux figures 8 à 12, qui représentent les organigrammes de la procédure et les opérations effectuées par le processeur applications 22 lors de l'élaboration des messages pixels MPk.

Le processeur applications 22 reçoit les informations provenant du capteur de positions,' celles-ci comportant d'une part les coordonnées Ci(Xci, Yci) de chacune des positions successives du stylet 8 ainsi détectées au fur et à mesure des acquisition successives, et d'autre part le signal de contact stylet CS (étape E2, figure 8).

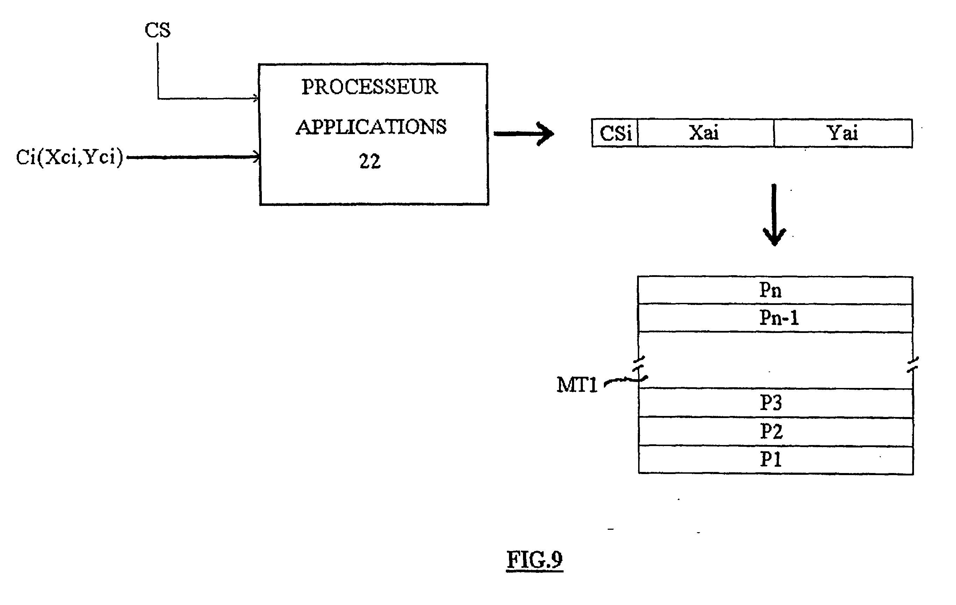

A chaque acquisition de coordonnées Ci (Xci, Yci), le processeur applications 22 créé un pixel correspondant Pi (étape E4). Cette action, représentée symboliquement à la figure 9, comprend essentiellement la transformation des coordonnées de saisie Ci(Xci, Yci) en coordonnées d'affichage Ai (Xai, Yai) et le positionnement d'un indicateur CSi de contact du stylet 8 sur la dalle sensitive 6 reflétant l'état du signal de contact stylet CS. Chaque pixel Pi ainsi obtenu est enregistré dans une première mémoire tampon MT1 (figure 9) associée au processeur applications 22 (étape E6). Ces pixels constituent les pixels candidats à la sélection (dénommé ci-après pixels candidats) pour faire partie d'un message pixels (étape E6).

On notera que dans le cas où la grille de coordonnées du capteur de positions et la grille de coordonnées de l'écran d'affichage ont le même maillage, les deux coordonnées Ci (Xci, Yci) et Ai (Xai, Yai) seront les mêmes, et l'étape de transformation de coordonnées sera alors inutile.

A chaque mémorisation de pixel candidat P, le processeur applications 22 détermine si celui-ci est le dernier pixel intégré dans la mémoire tampon MT1. Ce pixel est le dernier intégré au bloc en cours de mémorisation dans le cas d'une des deux conditions :

- si le stylet 8 n'est plus en contact avec la dalle sensitive 6, ceci étant vérifié par l'état du signal CS positionné à 0 (étape E8), et

- s'il correspond à une acquisition de coordonnées à l'issu de la période d'acquisition Tab impartie, démarrée à partir de la première acquisition.

Cette dernière condition est vérifiée à l'étape E10 par référence au nombre n de pixels Pi acquis depuis le début du tracé, ce nombre n étant choisi pour (n - 1) x la période entre deux acquisitions = Tab (égal ou inférieur à la durée de la persistance rétinienne). Dans l'exemple, le nombre n = 16.

Lorsque aucune de ces deux conditions n'est réalisée, le processeur application 22 sera alors en attente de la prochaine acquisition (branche b20).

Ainsi, pour la portion de début de tracé T1 considérée, la dalle sensitive 6 aura effectué 16 échantillonnages successifs durant la période d'acquisition Tab, transmettant au processeur applications 22 successivement 16 coordonnées de position correspondantes : C1 (Xc1, Yc1), C2(Xc2, Yc2), C3(Xc3, Yc3),..., C16(Xc16, Yc16) avec le signal CS à l'état 1.

Le seizième pixel candidat P16 est le dernier à satisfaire la deuxième condition, l'acquisition de la coordonnée suivante s'effectuant en-dehors du temps Tab.

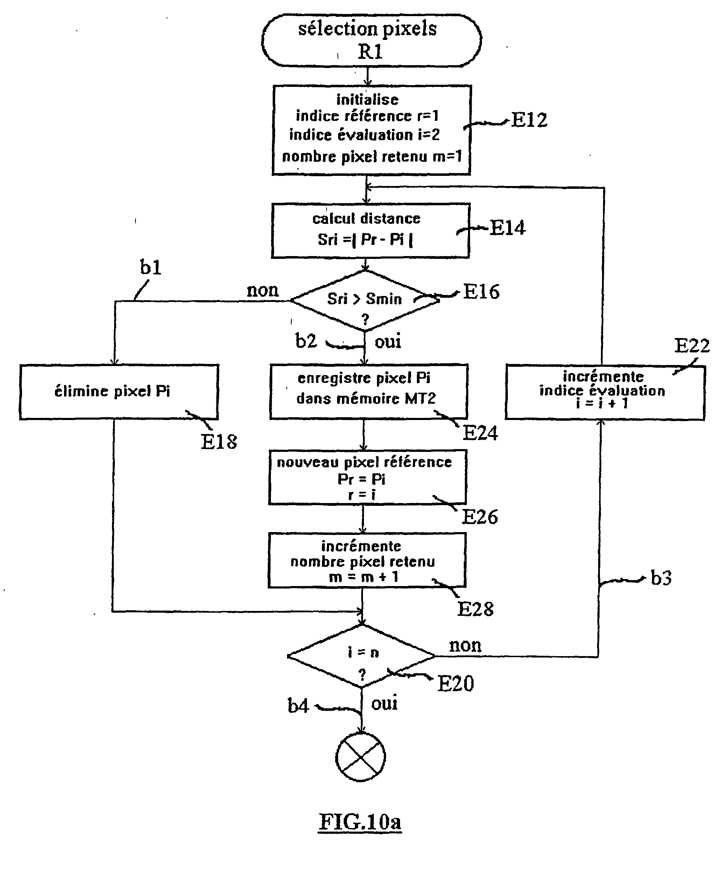

La procédure en ce qui concerne l'élaboration du premier message pixel se poursuit alors selon la branche b0 (développée à la figure 10a) pour l'exécution d'une routine R1 dans laquelle ce groupe de 16 pixels candidats P1, P2, P3, ..., P16 sera soumis à une suite d'opérations (dénommée ci-après routine de sélection de pixels R1) visant à sélectionner ceux destinés à être transmis vers le ou les écran(s) de visualisation. Le but de cette routine est de transmettre des pixels successifs de la mémoire tampon MT1 seulement dans la mesure où leur séparation dans un plan d'affichage dépasse un seuil minimum. Ainsi, on procède à une sélection des pixels (dénommés pixels candidats) de la mémoire MT1 pour éliminer ceux qui sont séparés de leurs voisins en amont par une distance inférieure ou égale à ce seuil minimum.

### A.1.1. Routine R1 de sélection de pixels parmi les pixels candidats à la sélection.

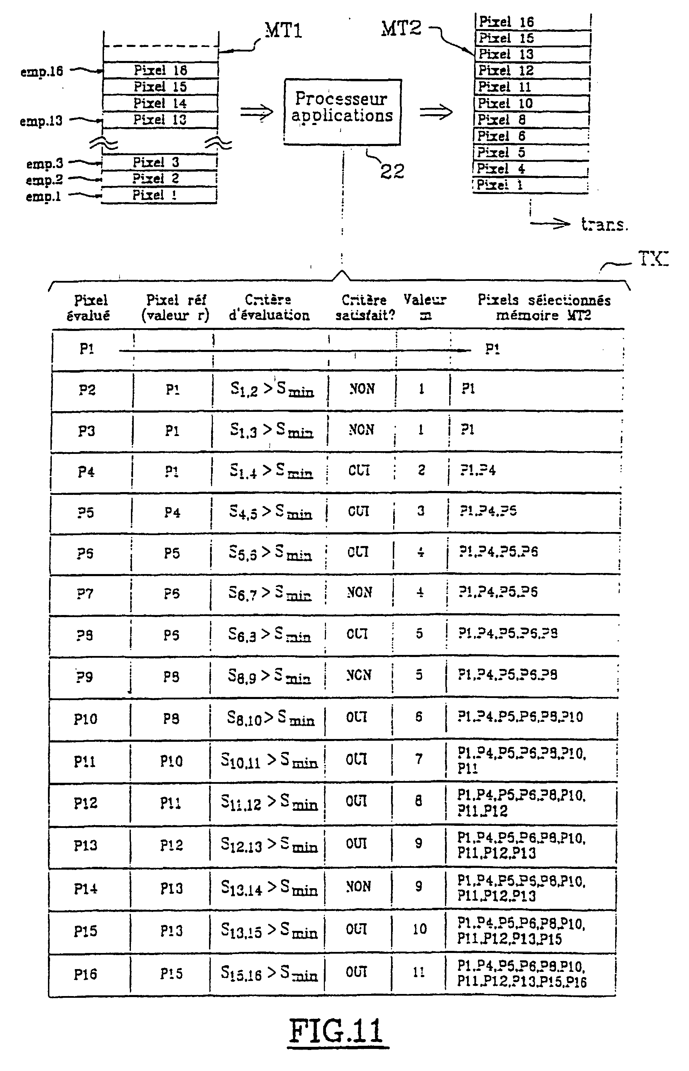

La routine de sélection de pixels R1 sera maintenant décrite par référence à l'organigramme de la figure 10a et à la représentation symbolique des opérations indiquées à la figure 11. Cette figure comporte un tableau TX1 qui résume l'état des différents paramètres au cours de l'élaboration du premier message pixels MP1, basé sur la portion de tracé T1 de la figure 7.

La routine met en oeuvre trois indices :

- un premier indice r qui retient de manière évolutive l'indice du pixel Pr servant de référence pour évaluer une distance vis-à-vis d'un pixel en cours d'évaluation, r étant un nombre entre 1 et n-1 (le $n^{ième}$ pixel étant le dernier du groupe, celui-ci ne peut servir de pixel de référence pour des pixels au sein de ce groupe);

- un deuxième indice m qui retient de manière évolutive le nombre de pixels du groupe sélectionnés pour transmission ; et
- un troisième indice i qui retient de manière évolutive l'indice du pixel Pi candidat en cours d'évaluation.

On débute la routine R1 en initialisant l'indice r à la valeur r = 1 et l'indice m à la valeur m = 1 (étape E12).

Ce positionnement initial des indices r et m reflète le fait que le premier pixel P1 du groupe est systématiquement sélectionné pour être transmis vers le ou les écran(s) de visualisation.

La sélection *de facto* du premier pixel P1 est symbolisée par la flèche à la ligne du premier pixel dans le tableau TX1 associé à la figure 11.

De la sorte, le premier pixel candidat du groupe à être soumis à une évaluation est le deuxième pixel du groupe (pixel P2) ; on initialise donc le troisième indice i avec la valeur i = 2.

Ensuite, le processeur applications 22 procède à déterminer la séparation S12 entre la position A1 (Xa1, Ya1) du pixel de référence P1 et la position A2 (Xa2, Ya2) du deuxième pixel P2, ce dernier étant effectivement le premier pixel candidat du groupe (étape E14).

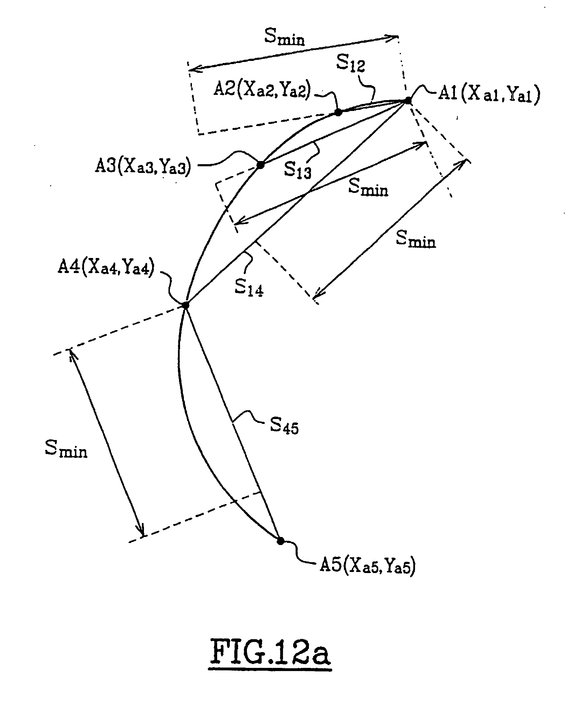

Cette séparation est représentée schématiquement à la figure 12a, qui est un agrandissement d'une partie de la portion de tracé T1 de la figure 7, montrant les séparations S12, S13, S34 et S45.

On notera que la figure 12a représente les points du tracé T1 en termes de coordonnées sur le plan d'affichage, c'est-à-dire avec la conversion des coordonnées de saisie Ci(Xci, Yci) en coordonnées du plan d'affichage Ai(Xai, Yai).

Plusieurs approches peuvent être utilisées pour déterminer la séparation entre deux pixels successifs.

Dans l'exemple illustré à la figure 12a, on évalue la distance réelle sur le plan d'affichage qui sépare ces deux pixels. Autrement dit, pour le cas de deux pixels successifs acquis en entrée désignées Pr et Pi et ayant respectivement les coordonnées cartésiennes Ar (Xr, Yr) et Ai(Xi, Yi) dans le plan image, ladite séparation Sri obtenue par $Sri = \{(Xr - Xi)^2 + (Yr - Yi)^2\}^{1/2}$. Dans ce cas - qui est celui décrit dans les organigrammes des figures qui suivent pour des raisons de simplicité didactique - on élimine les pixels succession de pixels acquis en entrée de manière à ce que cette séparation Sri entre deux pixels transmis soit supérieure à un seuil déterminé Smin, qui est une valeur numérique qui exprime la grandeur d'un vecteur partant d'un pixel Pr et orienté vers l'autre Pi de deux pixels considérés, comme le montre la figure 12a.

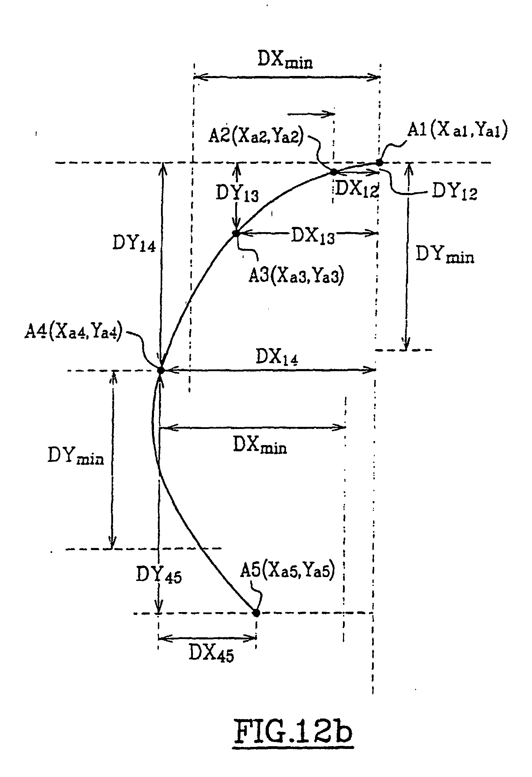

Selon une variante qui permet d'économiser du temps dans le calcul des séparations, on établit le seuil déterminé non pas par la distance réelle séparant deux pixels Pr et Pi, mais en considérant la différence DXri et DYri entre leurs coordonnées X et Y respectives (dans le cas d'un plan de coordonnées cartésien). Dans ce cas, qui est illustré à la figure 12b, la séparation minimale entre deux pixels successifs Pi et Pr transmis devra satisfaire soit :

la condition :

$$DXri = | Xr - Xi | > DXmin,$$

soit
la condition :

$$DYri = | Yr - Yi | > DYmin.$$

Autrement dit, il suffit que l'une des conditions précitées soit satisfaite pour que l'on considère que les deux pixels sont suffisamment séparés pour qu'ils puissent être transmis tous les deux. En effet, il se peut que deux pixels successifs présentent une séparation significative, faisant que le second des deux doit être transmis, mais essentiellement dans l'une seulement des composantes X ou Y (par exemple dans le cas d'un tracé sensiblement vertical ou horizontal). Seulement l'une des deux conditions précitées pourrait alors être satisfaite. Cela sera néanmoins suffisant pour que ce second pixel Pj ne soit pas éliminé.

Dans la figure 12b, on a représenté les seuil déterminés DXmin et DYmin pour le cas d'une mesure prise relativement à un premier pixel P1 situé aux coordonnées A1 (Xa1, Ya1), et les distances dans le sens des axes X et Y entre des pixels considérés, désignés ici de façon générique DXkl et DYkl où k et l représentent des indices de pixels (1, 2, 3, 4, 5). Ainsi, si l'un Pk des deux pixels est transmis, l'autre pixel transmis P1 aura une séparation DXkl dans le sens de la composante X, ou une séparation DYkl dans la composante DYkl dans le sens de la composante Y, supérieure respectivement à DXmin et DYmin.

En corollaire, on peut dire qu'on élimine de la transmission l'un de deux pixels successifs acquis en entrée Pk et Pl (normalement le second (Pl) des deux) si celui-ci est séparé de l'autre (le premier, soit Pk) par une distance inférieure à DXmin dans le sens de la composante X et inférieure à DYmin dans le sens de la composante Y du système de coordonnées (généralement le système de coordonnées du plan d'affichage auxquels sont destinés les pixels).

Quelque soit l'approche utilisée pour évaluer la séparation entre deux pixels successifs, on peut établir les valeurs de seuil minimal Smin, DXmin ou DYmin entre deux pixels successifs transmis comme étant n fois le pas élémentaire entre deux pixels adjacents dans le plan d'affichage. où n est un nombre entier égal ou supérieur à : 1, 2 ou 4, ou encore tout autre nombre selon l'application considérée. On comprendra que dans le cas d'une évaluation de la séparation en termes des composantes DXri et DYri précitées, le pas sera considéré respectivement dans le sens X et Y respectivement, et que dans le cas d'une évaluation de la séparation en termes de distance absolue, le pas sera considéré en nombre de pixels intervenant pour former une droite reliant les deux pixels considérés.

On notera que la séparation Sri ou DXri et DYriest analysée par rapport aux coordonnées Ai et Aj dans le plan d'affichage des pixels. Cependant, on peut tout aussi bien effectuer ces analyses de séparation Sri en se référant plutôt aux coordonnées Ci et Cj dans le plan de saisie de coordonnées, éventuellement en adaptant en conséquence le choix de valeur numérique pour la séparation Sri ou DXri et DYri. D'autres bases de calcul peuvent également être envisagées dès lors qu'elles peuvent être liées mathématiquement à la séparation entre deux pixels sur le plan d'affichage de ces pixels.

Bien entendu, ces considérations valent tout aussi bien pour d'autres systèmes de coordonnées : polaires, cylindriques, etc...

Dans la description qui suit, on supposera que la séparation entre deux pixels successifs est évaluée en termes de leur distance réelle de séparation Sri .

Toutefois, ses enseignements s'appliquent tout aussi bien au cas d'une évaluation de la séparation entre les pixels successif en termes de chacune de leurs composantes X, Y considérées indépendamment, comme expliqué plus haut.

Dans ce cas, il suffit de remplacer le critère d'évaluation:

"Sri > Smin ?"dans les explications et organigrammes qui suivent, où l'indice r désigne un pixel de référence et l'indice i désigne un pixel candidat à la transmission par :

$$"DXri > DXmin \text{ ou } DYri > DYmin?".$$

Ainsi, pour reprendre le déroulement de la routine de sélection, le processeur 22 détermine si cette séparation S12 est supérieure à une séparation minimale Smin stockée en mémoire (étape E16). La valeur de cette séparation minimale Smin, exprimée en termes d'unités élémentaires dans la grille de coordonnées de l'écran d'affichage, correspond à la limite de rapprochement admis entre un pixel candidat évalué Pi et le pixel de référence Pr pour ce pixel. Si la distance qui sépare le pixel candidat évalué Pi et son pixel de référence Pr est inférieure à cette limite Smin, on considérera que le pixel candidat évalué Pi n'apporte pas, ou pas suffisamment, d'informations graphiques pour justifier l'occupation des ressources qu'implique sa transmission dans un message pixel.

La séparation minimale Smin (ou, le cas échéant, la valeur DXmin ou Dxmin) est fixée en fonction de la capacité et des conditions d'utilisation de ressources, ainsi que des critères de qualité retenus. De manière générale, plus le maillage de grille de coordonnées de l'écran de visualisation sera serré, plus le nombre d'unités du déplacement Smin (ou DXmin, DYmin) sera important. Dans le cas d'utilisation d'un capteur de positions dans un environnement bruité, il est intéressant de définir une séparation minimale Smin d'au moins une unité de coordonnées.

On suppose que dans l'exemple, le processeur applications 22 détermine que la condition S12 > Smin n'est pas satisfaite (cf. figure 12a).

Il procède alors selon la branche b1 à l'élimination du pixel candidat P2, celui-ci étant trop rapproché du pixel de référence P1 pour justifier sa transmission (étape E18).

Dans le cas analogue de la variante représentée à la figure 12b où le critère correspondant est : "DX12 > DXmin ou DY12 > DYmin?" , on remarque que ce critère n'est pas satisfait non plus, d'où l'élimination également du pixel candidat P2.

Ensuite le processeur 22 vérifie si l'indice i de ce deuxième pixel candidat P2 est égal au nombre n (étape E20). Cette vérification permet un branchement vers la fin de la routine R1 (croix encerclée), par la branche b4, lorsque le dernier pixel candidat du groupe Pn aura été évalué.

Ceci n'étant pas le cas, le processeur 22 continue la routine en incrémentant l'indice i d'une unité, par la branche b3, le positionnant à la valeur i = 3 (étape E22), et retourne à l'étape E14.

L'état de la routine de sélection de pixels R1 à ce stade est résumé à la ligne P2 du tableau TX1 associé à la figure 11. On note par ailleurs que le pixel de référence à la ligne P3 demeure P1 pour le prochain pixel évalué.

Le processeur 22 calcule donc la séparation S13 entre le premier pixel P1 et le troisième pixel P3 maintenant le pixel candidat en cours d'évaluation (étape E16). Dans l'exemple, cette séparation S13 est encore inférieure à la séparation Smin (figure 12). Aussi, la routine passera successivement à l'étape E18 d'élimination du pixel P3, puis il sera vérifié à l'étape E20 que le troisième pixel P3 n'est effectivement pas le dernier pixel du groupe, et on passera donc à l'étape E22 d'incrémentation de l'indice i pour le porter à i = 4.

A ce stade, résumé à la ligne P3 du tableau précité, le pixel de référence demeure encore P1.

La routine R1 se poursuit avec le retour à l'étape E14 pour le calcul de la séparation S14 entre le quatrième pixel P4, devenu l'actuel candidat à la sélection P4 et le pixel de référence P1. Dans ce cas, cette séparation S14 (figure 12a) est supérieure à la séparation Smin.

La routine se poursuit alors par la branche b2 par l'enregistrement de ce pixel candidat, en tant que pixel sélectionné pour transmission, dans une seconde mémoire tampon MT2 dans laquelle sont stockés successivement les pixels sélectionnés pour constituer un message pixels (étape E24).

Dans le cas de la variante représentée à la figure 12b, le critère appliqué concernant la séparation entre les pixels P4 et P1 est : DX14 > DXmin ou DY14 > DYmin ? On constate que dans l'exemple de la figure 12b, chacune des deux conditions : DX14 > DXmin et DY14 > DYmin est satisfaite. Toutefois, comme expliqué plus haut, il aurait suffit que l'une seule de ces deux conditions soit satisfaite pour que le pixel candidat P4 soit retenu et transmis, et qu'il devienne alors le nouveau pixel référence Pr pour le pixel candidat qui le succède.

Ensuite la routine R1 procède à une étape E26 de mise à jour de la valeur r afin qu'elle corresponde à la valeur i actuelle (ici égale à 4) afin d'établir que le quatrième pixel P4, en vertu d'avoir été sélectionné, devient alors le pixel de référence Pr actualisé. Ensuite, à l'étape E28 l'indice m est incrémenté d'une unité pour comptabiliser le nombre instantané m de pixels sélectionnés pour transmission (actuellement égal à 2) et procède enfin à l'étape E20 permettant d'établir si le pixel traité est le dernier du groupe. Ceci n'étant pas le cas pour le quatrième pixel P4, la routine R1 se poursuit par la branche b3 afin d'incrémenter l'indice i d'une unité (étape E22).

A ce stade de la routine R1, résumé à la ligne P4 du tableau TX1 précité, on remarque que deux pixels sont sélectionnés pour le message pixels (le pixel de référence sur cette ligne est P1, ayant servi de référence pour le pixel P4).

La routine R1 continue donc avec l'évaluation du pixel candidat P5 (i étant incrémenté à 5 à l'étape E22) et passe par les étapes E14 et E16 précitées. A l'issu de l'étape E16 il est déterminé que la séparation S45 entre le pixel de référence P4 et le pixel candidat évalué P5 est supérieure à Smin. Ainsi, la routine R1 se poursuit après cette étape par la branche b2 passant par les étapes E24, E26 et E28, permettant d'enregistrer ce cinquième pixel P5 comme pixel sélectionné et de positionner les indices r, i et m comme expliqué précédemment. La ligne P5 du tableau TX1 de la figure 11 résume l'état de la routine R1 à ce stade.

La routine se poursuit avec le pixel candidat suivant P6, et ainsi de suite, avec mise à jour conséquente des pixels candidats en cours d'évaluation, des pixels de référence Pr et de l'enregistrement des pixels sélectionnés pour constituer le message pixels MP1. Lorsque tous les pixels candidats auront été évalués, la routine R1 sera terminée en empruntant la branche b4 après l'étape E20.

Dans l'exemple, les 11 pixels candidats suivants auront été sélectionnés pour constituer le message pixels à l'issue de la routine R1, selon les critères établis : P1, P4, P5, P6, P8, P10, P11, P12, P13, P15 et P16. Les autres pixels candidats auront été rejetés.

On comprendra que la même sélection de pixels pour transmission aurait pu être obtenue en appliquant les critères "DXri > DXmin ou DYri > DYmin ?" conformément à la variante décrite par rapport à la figure 12b. L'identité des résultats entre ces deux variantes dépendra du choix des valeurs numériques retenues pour la valeur Smin d'une part et les valeurs DXmin et DYmin d'autre part. On notera par ailleurs que les valeurs DXmin et DYmin peuvent être égales ou différentes l'une de l'autre, par exemple pour tenir compte d'une différence de résolution selon les axes X et Y du plan de coordonnées.

Ces pixels sélectionnés sont stockés au fur et à mesure de leur sélection, et dans l'ordre de leur sélection, dans une seconde mémoire tampon MT2 gérée par le processeur applications 22 (figure 11). S'agissant de pixels destinés à constituer un premier message pixels MP1, c'est-à-dire un message pixels dont le premier pixel n'est pas à lier par un segment de droite à un pixel précédemment transmis, l'indicateur de contact CS1 du pixel P1 ayant passé de l'état 0 à l'état 1, le message pixels comportera tous les pixels stockés dans la deuxième mémoire tampon MT2. L'ordre de succession et de transmission des pixels sélectionnés dans le message pixels ainsi constitué commence par le pixel P1 et se termine par le pixel P16. Le nombre m1 de pixels sélectionnés du groupe étant 11, l'en-tête du message comportera cette valeur sous forme binaire dans les bits D0-D3 du premier octet (figure 6).

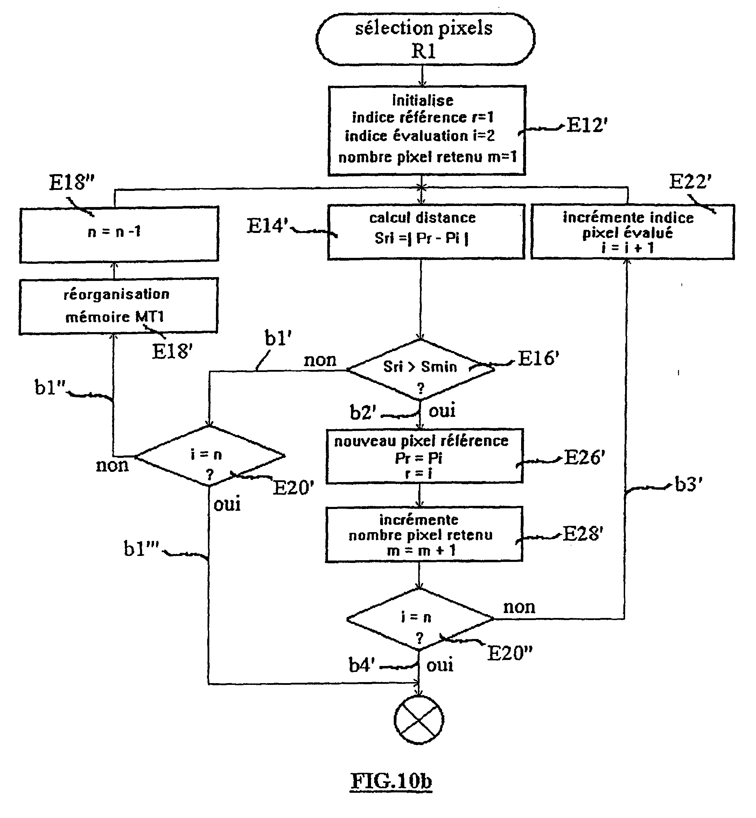

En variante, il est possible d'effectuer la routine de sélection de pixels sans utiliser une deuxième mémoire tampon MT2, en procédant à la place à une réorganisation du contenu de la mémoire tampon MT1. La figure 10b montre l'organigramme de cette variante. Comme dans le cas précédent, les trois indices r, m et i seront initialisés en début de routine R1 par les valeurs

r = 1, i = 2 et m = 1 à l'étape E12'. De même l'évaluation de la séparation minimale entre le pixel de référence Pr et le pixel candidat à la sélection évalué Pi prendra effet aux l'étapes E14' et E16'. Lorsque le pixel candidat Pi évalué est séparé du pixel de référence actuel Pr par une distance inférieure à Smin, la routine R1 se poursuivra par la branche b1' afin de déterminer si ce pixel Pi est le dernier de la mémoire MT1 ( étape E20'); dans l'affirmative, la routine R1 sera terminée par le passage à la branche b1'''. La mémoire MT1 comportera alors les pixels Pi retenus dont le nombre est donné par l'indice m. Dans le cas de figure où le pixel Pi n'est pas le dernier de la mémoire MT1, la procédure d'élimination du pixel candidat Pi non sélectionné en raison de sa trop grande proximité du pixel de référence consiste en un décalage d'un emplacement en mémoire MT1 de tous les pixels de rang supérieur à i pour combler la ligne laissée vacante par l'élimination de ce pixel Pi (étape E18'). Ce réarrangement a pour effet de remplacer le pixel Pi par le pixel Pi+1, celui-ci devenant ainsi le nouveau pixel Pi pour évaluation . On notera ici qu'à la différence du cas précédent (figure 10a), l'enregistrement du pixel sélectionné n'est alors pas nécessaire, tout pixel étant gardé dans la mémoire MT1 s'il n'a pas été éliminé. Le nombre n de pixels contenu dans la mémoire MT1 sera ensuite décrémenté d'une unité (étape E18") signifiant ainsi l'élimination du pixel candidat Pi non retenu. Puis la routine R1 se poursuivra alors par l'évaluation du nouveau pixel Pi par les étapes E14' et E16'.

Dans le cas où la séparation Sri est supérieure à Smin, la routine R1 empruntera la branche b2' afin de retenir le pixel candidat Pi. Ce dernier devient alors le nouveau pixel de référence (étape E26'). Ensuite, le nombre m de pixels sélectionnés sera incrémenté d'une unité (étape E28'). Enfin, il sera déterminé si le pixel Pi retenu n'est pas le dernier pixel de la mémoire MT1 (étape E20"). Si ce pixel Pi n'est effectivement pas le dernier de la mémoire MT1, la routine R1 se poursuivra par la branche b3' et l'indice d'évaluation i sera incrémenté d'une unité (étape E22') et l'évaluation du nouveau pixel candidat Pi prendra effet par les étapes E14' et E16'.

Lorsque le dernier pixel Pi candidat à la sélection de la mémoire MT1 aura été traité selon les étapes E14' et E16' et la branche b2' ou b1' selon les cas, la routine R1 sera terminée et empruntera la branche b4'. Le nombre m donne à ce stade le nombre de pixels retenus pour constituer le message pixel MP1.

La configuration du contenu de la mémoire MT1 à la fin de la procédure selon cette variante sera alors identique à celle indiquée à la figure 11 pour la deuxième mémoire tampon MT2. Le message pixels MP1 est alors transmis à partir de la mémoire MT1 comme pour le cas précédent.

### A.1.2. Transmission du premier message pixels MP1.

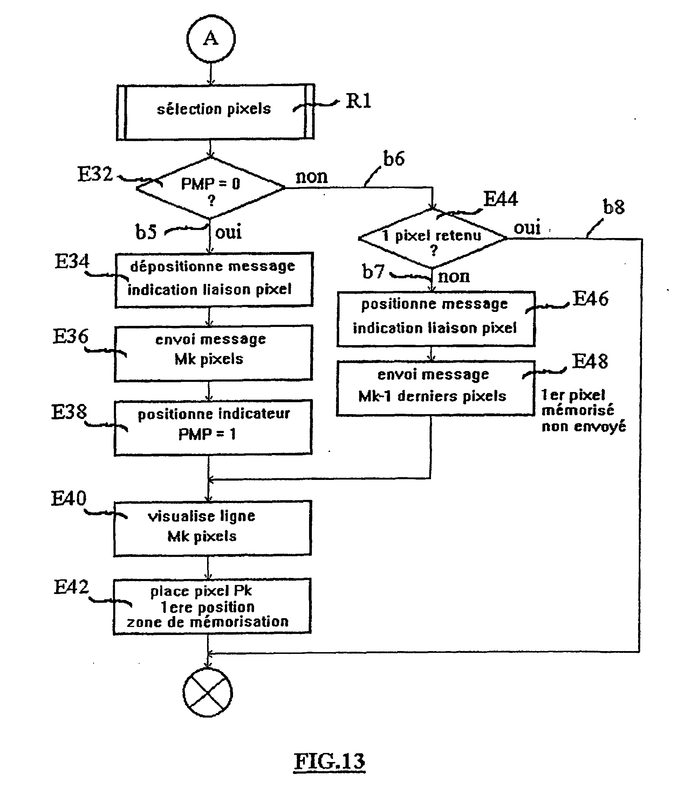

Une fois le message pixels MP1 ainsi constitué, la procédure se poursuit en vu de transmettre ce message. Les étapes initiales liées à cette transmission seront maintenant décrites par référence à la figure 13.

Après la routine R1 de constitution de message pixel, le processeur application 22 détermine si le message pixels MP1 constitue le premier message pixels envoyé, c'est à dire s'il correspond à la formation des pixels d'un début de tracé (étape E32). A cette fin, on utilise un indicateur dénommé PMP dont l'état logique indique si le message pixels en voie de transmission correspond à un enchaînement d'un message pixel précédent ou s'il correspond à un début de tracé. La convention utilisée dans l'exemple fait que l'état logique 0 de cet indicateur signifie qu'aucun message pixel représentant le tracé en cours n'a été transmis auparavant et l'état logique 1 signifie qu'au moins un message pixel du tracé en cours a été transmis. A l'initialisation du processeur applications 22, cet indicateur PMP est donc positionné à l'état logique 0 signifiant bien évidemment qu'aucun message pixel n'a encore été transmis.

Cette étape E32 consiste donc à établir si le message devant être transmis fait suite à un message précédent, c'est-à-dire si le premier pixel du message pixels actuel doit être lié au dernier pixel du message précédent.

La portion de tracé T1 représentée à la figure 7 ayant donné lieu au message pixels MP1 considéré constitue le début d'un tracé, et par conséquent n'a pas de message pixels précédent auquel il fait suite.

Ainsi, les opérations suivent la branche b5 et le processeur applications 22 désactive l'indicateur de liaison (étape E34) pour ce message. Cette opération consiste à positionner à l'état 0 le bit BL à l'emplacement D7 du troisième octet du message pixels (figure 6).

Ensuite, le processeur applications 22 envoie le message pixels MP1 au processeur de communications 24 afin que celui-ci le transmette en dehors du dispositif de télé-écriture émetteur 2a vers un ou plusieurs autres moyens de réception du message par le réseau téléphonique 4, par exemple le dispositif récepteur 2b (étape E36). Pour une telle transmission de message pixels MPk dont les pixels ne sont pas à lier à un précédent (ici pour le cas du message pixels MP1), tous les mkl pixels (=11) du message pixels sont transmis.

Ensuite, le processeur applications 22 positionne l'indicateur PMP à 1 exprimant le fait qu'un message pixels a été envoyé pour le tracé en cours (étape E38).

Le message pixels MP1 est transmis ensuite vers les moyens de visualisation physiquement intégrés à la dalle sensitive 6 qui réalisent le tracé en cours. En réponse, ces moyens de visualisation constitueront sur l'écran une ligne reliant les m 1 pixels sélectionnés constituant le premier message pixels MP1 (étape E40). Cette opération consiste à construire une droite reliant les pixels successifs P1, P3, P4, ... du message pixels MP1 selon les techniques décrites plus haut. Il en résulte alors un tracé continu du premier pixel P1 au dernier pixel sélectionné (P16) à l'image de la portion de tracé T1 réalisé par le stylet 8.

On notera que le message pixels est transmis prioritairement vers les écrans distants (étape E36), étant donné que la liaison avec ces écrans, ici par le réseau téléphonique, est la plus lente. Cette disposition contribue notamment à réduire l'écart entre l'apparition des pixels du tracé sur les écrans distants et l'apparition de ces mêmes pixels sur l'écran de la dalle sensitive 6.

Le message MP1 étant le premier message pixels d'un tracé continu et le signal CS étant positionné à l'état 1, le processeur applications 22 placera le dernier pixel du message pixels MP1 (en l'occurrence le pixel P16) en première position des mémoires tampons MT1 et MT2. Ce pixel devient le pixel de référence pour les pixels suivants (étape E42).

Le premier message pixels MP1 ayant été traité et transmis, le procédé se poursuit pour les pixels du deuxième message pixels MP2.

## A.2. Continuation d'un tracé : élaboration d'un message pixels lié à un message pixels précédent.

L'acquisition des pixels candidats au message pixels suivant le premier message pixels MP1 s'effectue durant la même période d'acquisition Tab que pour le premier message pixels. Cependant, cette période Tab pour un message suivant doit dans ce cas inclure le temps entre la dernière acquisition pour le dernier pixel candidat du premier message pixels et de la première acquisition pour le premier pixel candidat au deuxième message pixel. Aussi, le nombre de pixels candidats au deuxième message pixels sera inférieur de 1 au nombre de pixels candidats au premier message pixels, c'est-à-dire égal à 15 dans le cas de l'exemple considéré. On comprendra que cette situation s'applique pour tous les messages pixels suivants tant que le stylet 8 reste en contact avec la dalle sensitive 6.

La saisie des 15 coordonnées C17 à C31 pour obtenir les 15 pixels candidats de ce prochain message pixels suit immédiatement après la saisie précédente pour le premier message pixels MP1. dans un même flot, sans qu'il y ait de changement de fréquence d'acquisition. Ainsi, la saisie des coordonnées C17 à C31 s'effectue en parallèle avec les étapes d'élaboration du premier message pixels MP1.

Après l'obtention du message pixels MP1 relatif à un début de tracé, on suppose que le stylet 8 reste encore en contact avec la dalle sensitive 6 durant une période au moins égale au temps d'acquisition Tab pour continuer à faire évoluer le tracé avec d'autres coordonnées de saisies successives. De la sorte, au moins le deuxième message pixels MP2 sera obtenu durant une période d'acquisition Tab ininterrompue.

## A.2.1. cas d'acquisitions ininterrompues de coordonnées durant la période d'acquisition Tab du message pixels en cours.

L'élaboration du message pixels pour ce cas de figure sera maintenant expliqué dans le cadre de message pixels MP2.

Le deuxième message pixels MP2 contient des pixels formant un tracé continu avec les pixels du premier message MP1.

Comme il a été mentionné plus haut, le dernier pixel du message pixels MP1 a été placé en première position de la mémoire tampon MT1 (ainsi que dans la mémoire tampon MT2), formant ainsi le pixel de référence pour les pixels candidats au deuxième message pixels.

La procédure d'élaboration du deuxième message pixels se poursuit avec la saisie par le capteur de la dalle sensitive 6 des coordonnées de position Ci(Xci, Yci) succédant à la saisie des seize coordonnées C1-C16 déjà réalisée pour l'obtention du premier message pixels MP1.

Ainsi, la procédure engage de nouveau la routine de sélection R1 (figure 8) à partir des étapes de réception des coordonnées (étape E2), de leur conversion en pixels (étape E4) et de la mémorisation des pixels (étape E6) et de détection du stylet (étape E8).

La période d'acquisition Tab fixée permet d'obtenir quinze nouvelles acquisitions de coordonnées. Ces quinze acquisitions donnent ainsi lieu à quinze données pixels candidats P17 à P31 stockés dans la mémoire tampon MT1, qui contient déjà le dernier pixel P16 sélectionné du message pixels précédent MP1. On remarque que, comme pour le cas précédent, le signal contact stylet CS est constamment à l'état logique 1 durant l'acquisition de ces quinze nouvelles coordonnées, cet état étant détecté à l'étape E8 (figure 8).

Lorsque la période d'acquisition Tab pour le deuxième message pixels MP2 est épuisé (étape E10) les quinze nouvelles coordonnées auront été saisies et la procédure pour ce message pixels se poursuit avec la routine R1 pour la sélection des pixels destinés à être transmis parmi le groupe de pixels candidats P17 à P31. Cette sélection s'effectue comme pour l'obtention du premier message pixel, avec les mêmes critères de sélection. Aussi, cette routine R1 ne sera pas décrite à nouveau par souci de concision.

Le deuxième message pixels MP2 correspondant à la saisie des 15 coordonnées C17-C31 sera alors constitué du ou des autres pixels sélectionnés parmi les pixels candidats P17 à P31 dont le premier est déterminé par le pixel P16 provenant du message pixel précédent.

A l'issu de la routine R1 (figure 13) le processeur applications 22 vérifie que ce deuxième message pixels succède à un message pixels précédent par la comparaison de l'indicateur PMP (figure 13, étape E32). Ceci étant le cas, la procédure suit la branche b6. La première étape de cette branche b6 consiste à déterminer si le nombre M2 de pixels retenus dans la deuxième ' mémoire MT2 est égal à 1 (étape E44). Dans l'exemple, le nombre M2 de pixels étant différent de 1, le processeur applications 22 poursuit la procédure selon la branche b7 en positionnant le bit BL indicateur de liaison à l'état logique 1 pour signifier le fait que les pixels du deuxième message MP2 doivent être reliés au dernier pixel du message MP1 précédemment reçu (étape E46).

A partir des M2 pixels stockés dans la mémoire tampon MT2, le processeur constitue un message pixel MP2 qui ne comportera que les M2-1 derniers pixels de cette mémoire. En effet. comme expliqué auparavant, le premier pixel (ici P16) de la mémoire tampon MT2 faisait précédemment partie des pixels du premier message pixels MP1 transmis, et il est donc inutile de transmettre ce.même pixel à nouveau.

Autrement dit, le deuxième message pixels comportera tous les pixels candidats validés lors de la deuxième période d'acquisition Tab. Ces pixels sont au nombre m2 égal à M2-1.

L'en-tête de ce message pixels MP2 est constitué selon le protocole décrit par référence à la figure 6, avec le nombre m2 de pixels contenu dans les quartre premiers bits D0-D3 du premier octet. L'indicateur de liaison BL étant positionné dans le champs du premier pixel candidat retenu du message MP2, c'est à dire le deuxième pixel de la mémoire tampon MT2.

Le processeur applications 22 transfert ensuite vers le processeur communications 24 le message pixels MP2 avec les M2-1 derniers pixels de la mémoire MT2. On remarque que si le processeur applications 22 devait déterminer à l'étape E44 que le nombre M2 de pixels contenu dans la mémoire MT2 ne contenait qu'un seul pixel (branche b8), il serait conclu que ce pixel soit obligatoirement le pixel correspondant au dernier pixel sélectionné du message pixels précédent, stocké d'emblée dans la mémoire, et donc qu'aucun pixel issu des 15 nouvelles saisies de coordonnées n'aurait été sélectionné. Une telle situation alors que la dalle sensitive 6 est toujours active, comme vérifié à l'étape E8, signifierait que le stylet 8 au cours de ces 16 saisies n'a pas évolué au-delà de la séparation Smin autour de la position du pixel de référence. Ce pixel de référence ayant été déjà transmis avec le message pixels précédent (en tant que dernier pixel sélectionné), il est inutile de le transmettre à nouveau. La procédure se poursuivrait alors avec l'étape E2 précité (figure 8) pour traiter un nouveau message pixels.

A la suite de l'étape E46, le processeur communications 24 transmet à son tour ce message pixels MP2 vers le ou les moyen(s) de visualisation relié(s) par la ligne téléphonique 4 (étape E48).

Ensuite, le processeur applications 22 transmet le message pixels MP2 vers l'écran associé à la dalle sensitive 6 pour que celui-ci affiche la portion de ligne d'une part reliant entre eux les M2-1 pixels sélectionnés, et d'autre part en reliant le premier pixel parmi les M2-1 pixels au dernier pixel P16 du message pixels précédent, afin de visualiser une ligne de M2 pixels (étape E40).

Enfin, le processeur applications 22 positionne en tête des mémoires MT1 et MT2 le dernier pixel sélectionné du deuxième message pixels MP2, celui-ci étant destiné à servir de premier pixel de référence pour la constitution d'un troisième message pixels MP3.

Ainsi, tant qu'il est détecté que le stylet 8 reste en contact avec la dalle sensilive 6 (étape E8), chaque message pixels sera constitué d'un nombre variable de pixels sélectionnés, et le bit indicateur de liaison BL du premier pixel sera positionné à l'état 1.

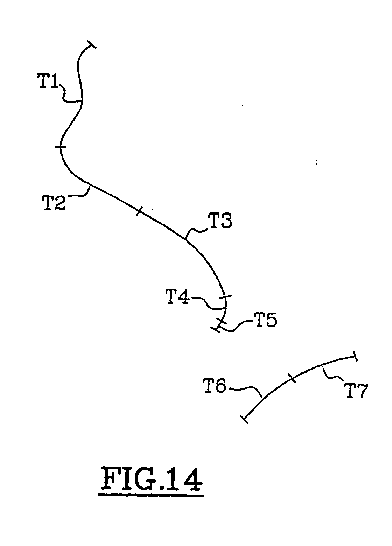

Comme le montre la figure 14, la portion de tracé T1 de l'exemple est suivie de manière continue de quatre portions de tracé successifs et ininterrompus T2 à T4, chacune résultant d'un message pixels respectif obtenue selon les étapes E2 à E48.

Ce tracé se termine par le dernier pixel sélectionné de la dernière portion de tracé T5, qui comporte une interruption dans le tracé. On décrira maintenant l'obtention du message pixels MP5 relatif à cette portion de tracé interrompue.

## A.2.2. cas d'acquisition de coordonnées interrompue durant la période d'acquisition Tab.

On suppose ici qu'une fin de tracé est causée par la levée du stylet 8 hors de la dalle sensitive 6 avant que la période d'acquisition Tab soit épuisée pour les saisies de coordonnées relatives à ce message pixel, mais qu'un certain nombre d'acquisitions de coordonnées ont néanmoins été réalisées. Cette situation sera décrite pour la portion de tracé T5 de la figure 14.

Dans ce qui suit, les étapes identiques à celles décrites précédemment et apparaissant dans un contexte similaire portent les mêmes références suivies du symbole "prime".

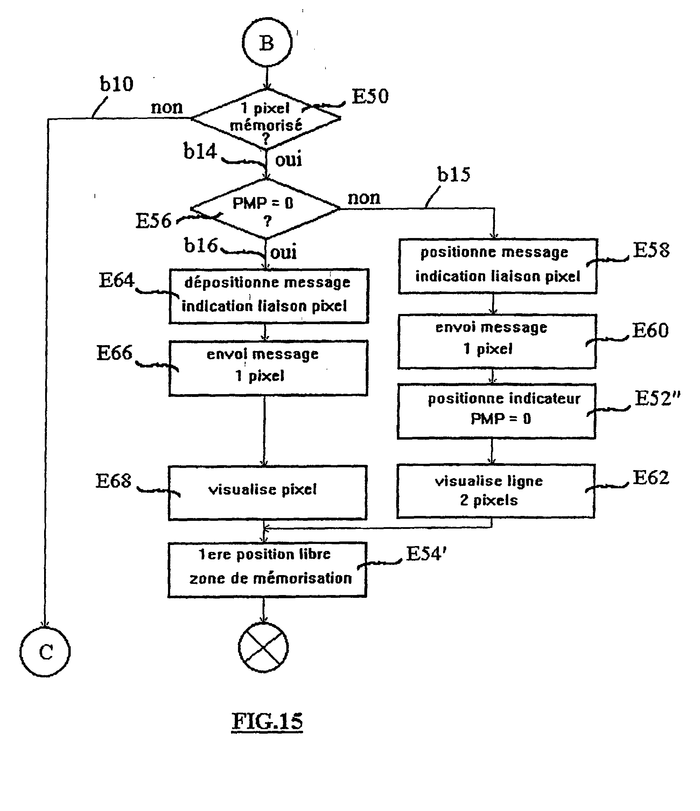

L'acquisition de coordonnées (étape E2), leur conversion en pixels (étape E4) et la mémorisation des pixels (étape E6) pour la portion de tracé T5 procède comme pour les tracés précédents jusqu'à ce que soit détecté l'interruption du tracé par le processeur applications à l'étape E8. Cette interruption provoque le branchement du procédé sur la branche b9 (figure 8), dont les étapes sont indiquées à l'organigramme de la figure 15.

Le processeur applications 22 détecte alors si, pour la période d'acquisition Tab interrompue, une seule paire de coordonnées Ci(Xci, Yci) a été saisie (étape E50). On suppose dans l'exemple considéré que cela n'est pas le cas.

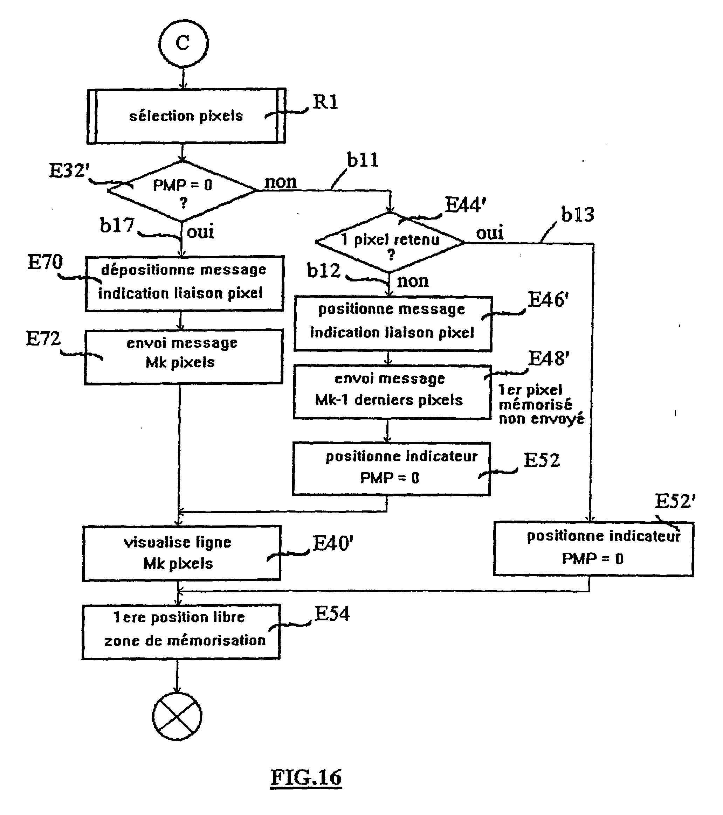

Le procédé se poursuit alors selon la branche b10 avec la routine R1 de sélection et mémorisation de pixels destinés à être transmis pour cette portion de tracé interrompue T5 (figure 16). A l'issu de cette routine R1, le processeur applications 22 produit un message pixels MP5 contenant après l'en-tête le ou les pixel(s) sélectionné(s), dont le nombre est m5.

Ensuite, le processeur applications 22 analyse si ce message pixels MP5 fait suite à un message pixels envoyé précédemment, comme pour l'étape E32 décrite plus haut par référence à la figure 13 (étape E32'). Cela étant le cas, le procédé se poursuit sur la branche b11. Le processeur applications 22 détermine, comme pour l'étape E44 précédemment décrite, si le nombre de pixels retenus est égal à I (étape E44'). Cela n'étant pas le cas, la procédure se poursuit selon la branche b12 par le positionnement de l'indicateur de liaison de pixel (E46'), et la transmission des M5-1 derniers pixels stockés la deuxième mémoire MT2 (étape E48'), ces M5-1 derniers pixels constituant les m5 pixels du message pixels MP5, de manière analogue aux étapes E46 et E48 précédemment décrites.

S'agissant du dernier message pixels avant l'interruption du tracé, le processeur applications 22 positionne l'indicateur PMP à l'état logique 0 pour noter le fait que le message pixels suivant MP6, en cours de préparation, devra être traité comme un premier message pixel (étape E52).

Ensuite, le processeur applications 22 commande la visualisation de la ligne de pixels sur l'écran de la dalle sensitive 6 comme dans le cas précédent (étape E40').

Toutefois, à la différence d'un cas où le pixel suivant doit être lié au précédent, le processeur applications 22 n'a pas a réserver ici le premier emplacement des mémoires tampon MT1 et MT2 pour le dernier pixel sélectionné du message pixels MP5 (étape E54). Autrement dit, on prépare le nouveau message pixels MP6 en tant que premier élément d'un nouveau tracé, à l'instar du tracé T1, et donc sans référence à un pixel précédent.

Dans le cas où il est détecté à l'étape E44' que le nombre de pixels retenu est égal à 1, l'unique pixel ne serait pas transmis, comme expliqué précédemment, et la procédure emprunterait la branche b13 afin de positionner l'indicateur PMP à l'état logique 0 (étape E52'), puis procéderait à la libération de la première position des mémoires tampons MT1 et MT2 (étape E54).

Ainsi, pour l'élaboration et la transmission du message pixels MP6 correspondant à portion T6 d'un nouveau tracé (figure 14), on procède comme pour le cas du premier message pixels MP1 (étapes E2 à E42).

Dans l'exemple, la portion de tracé T6 est suivie par une portion de tracé liée T7 (figure 14). Pour le message pixels MP7 correspondant à cette portion de tracé T7, on procède alors comme avec le message pixels MP2.

On comprend ainsi que le procédé de formation et de transmission de messages pixels décrit jusqu'ici permet de gérer aussi bien des tracés continus que des tracés comportant des discontinuités, dès lors que chaque période d'acquisition Tab donne lieu à des messages pixels correspondants comportant plus d'un pixel.

## A.3. Elaboration d'un message pixels ne comportant qu'un seul pixel.

Il sera maintenant décrit la gestion de messages pixels ne comportant qu'un pixel unique. Un tel message pixels peut être soit lié au message pixels précédent, soit détaché de ce dernier.

## A.3.1. cas où l'unique pixel est à lier à un message pixels précédent.

Ce cas peut se produire à une portion de tracé Tf située tout à la fin d'un tracé continu. C'est-à-dire que la dernière acquisition correspond au dernier pixel du tracé Tf. A ce titre, ce pixel est mémorisé en deuxième position de la mémoire tampon MT1, la première position dans cette mémoire étant tenue par le dernier pixel du message pixel MPf-1, c'est à dire le pixel de référence du message pixel MPf.

La procédure dans ce cas se poursuit alors selon les étapes E2 à E8 précédemment décrites (figure 8). A l'issu de l'étape E8, il est détecté que le stylet 8 n'est plus en contact avec la dalle sensitive 6. Le processeur applications 22 procède alors selon la branche b9 afin de déterminer si, pour la période d'acquisition Tab venant d'être ainsi interrompue, un seul pixel candidat a été mémorisé dans la mémoire MT1 (en plus du dernier pixel sélectionné du message pixels précédent initialement mis dans cette mémoire) à l'étape E50 de la figure 15.

On suppose que cela est le cas. Le processeur applications 22 poursuit alors la procédure selon la branche B14 et détermine si cet unique pixel sélectionné est à relier au dernier pixel d'un message pixels précédent, comme pour l'étape E32 ou E32' précédemment décrite (étape E56). S'agissant ici du dernier pixel d'un tracé continu, il doit effectivement être lié au dernier pixel du message pixels précédent. A cette fin, le processeur applications 22 suit la branche b15 et positionne à l'état 1 le bit indicateur de liaison BL associé au message pixels contenant cet unique pixel (étape E58) et commande au processeur communications 24 la transmission de cet unique pixel sélectionné pour la période Tab interrompue (étape E60).

Ensuite, le processeur applications 22 positionne l'indicateur PMP à l'état logique 0, exprimant le fait que le message pixels suivant, en cours de préparation, sera le premier message pixel, ce message suivant étant nécessairement à gérer comme provenant d'un nouveau tracé pouvant débuter à tout emplacement de la dalle sensitive 6 (étape E52").

Une fois la transmission commandée, le processeur applications 22 commande l'affichage sur la dalle sensitive 6 de la ligne reliant le dernier pixel transmis du message pixels précédent à l'unique pixel du message pixels actuel (étape E62).

Ensuite, le processeur 22 libère, pour le message pixels suivant, le premier emplacement libre des mémoires MT1 et MT2 normalement réservé pour le dernier pixel du message pixels précédent (étape E54'), comme expliqué précédemment pour l'étape E54.

### A.3.2. cas où l'unique pixel n'est pas à lier à un message pixels précédent.

Ce cas peut correspondre à une opération dite de "toucher-lever" du stylet 8 vis-à-vis de la dalle sensitive 6, c'est-à-dire lorsque le stylet est utilisé seulement pour pointer sur un élément de la dalle, sans déplacement significatif. Une telle opération de toucher-lever est courante avec les dalles sensitives, notamment pour sélectionner une commande qui se présente sous la forme d'une icône, d'un bouton ou d'un menu affiché sur la dalle.

On décrira maintenant le cas d'une action toucher-lever avec le stylet 8 dans le cas où cette action donne lieu à la désignation d'un unique pixel.

Comme pour les cas précédents, le processeur applications 22 suit les étapes E2 à E8 de la figure 8. A l'interruption du contact avec le stylet 8 (étape E8), le processeur procède selon la branche b9 pour déterminer si un seul pixel a été mémorisé à l'étape E6 (figure 15, étape E50). Cela étant le cas, il détermine ensuite si ce pixel mémorisé correspond à un pixel devant être lié au dernier pixel d'un message pixels précédent (étape E56). S'agissant d'un pixel isolé de désignation sur écran, aucun lien avec un pixel précédent n'est à établir. Le processeur poursuit alors selon la branche b16 et désactive l'indicateur de liaison (étape E64) pour ce message, en positionnant le bit BL à l'état logique 0. Puis il commande au processeur de communications 24 de transmettre ce pixel vers le ou les moyens de réception relié(s) par la ligne téléphonique 4 (étape E66).

Ensuite, le processeur applications 22 procède aux étapes de visualisation de ce pixel sur l'écran de la dalle sensitive 6 (étape E68) et libère, pour le message pixels suivant, le premier emplacement libre des mémoires MT1 et MT2 normalement réservé pour le dernier pixel du message pixels précédent (étape E54').

### A.4. Elaboration d'un message pixels correspondant à tracé bref.

Dans la pratique, il se peut qu'un tracé significatif soit réalisé dans un intervalle de temps très court entre le moment de mise en contact du stylet 8 avec la dalle sensitive et le retrait du stylet. Ce type de tracé peut résulter par exemple d'une action visant à sélectionner rapidement une commande présentée sur icône avec une suite courte de pixels, ou à cocher une case présentée sur écran. Il peut également résulter d'une opération toucher-lever comme décrit précédemment, avec un léger glissement du stylet 8 sur la dalle sensitive 6.

Dans ce cas, le processeur suit les étapes E2 à E8 de la figure 8 jusqu'au retrait du stylet 8 (étape E8) avant la fin du temps d'acquisition. Il poursuit alors la procédure selon la branche b9. Cependant, à la différence du cas précédent, l'étape de conversion de coordonnées acquises à l'étape E4 donne lieu à un nombre de pixels supérieur à 1.

De la sorte, le processeur applications 22 détermine à l'étape E50 (figure 15) que le nombre de pixels mémorisés n'est pas égal à 1 et poursuit donc par la branche b10 pour effectuer d'abord la routine R1 de sélection des pixels (figure 16).

A l'issu de cette routine R1, le processeur applications 22 détermine à l'étape E32' que les pixels mémorisés ne sont pas à relier au dernier pixel d'un message pixels précédent, l'indicateur PMP étant égal à l'état logique 0 du fait que le tracé est à la fois bref (c'est-à-dire d'une durée inférieure à Tab) et isolé. Le processeur procède alors selon la branche b17 à désactiver le bit indicateur de liaison BL pour le message pixels comportant le ou les pixels sélectionnés (étape E70) et à commander au processeur de communications d'envoyer tous les mk pixels sélectionnés vers le ou les moyens de réception relié(s) par la ligne téléphonique 4 (étape E72).

Ensuite, le processeur commande la visualisation des pixels sélectionnés sur l'écran de la dalle sensitive (étape E40') et libère le premier emplacement de la mémoire (étape E54) comme expliqué précédemment.

## B. Réception d'un message pixel.

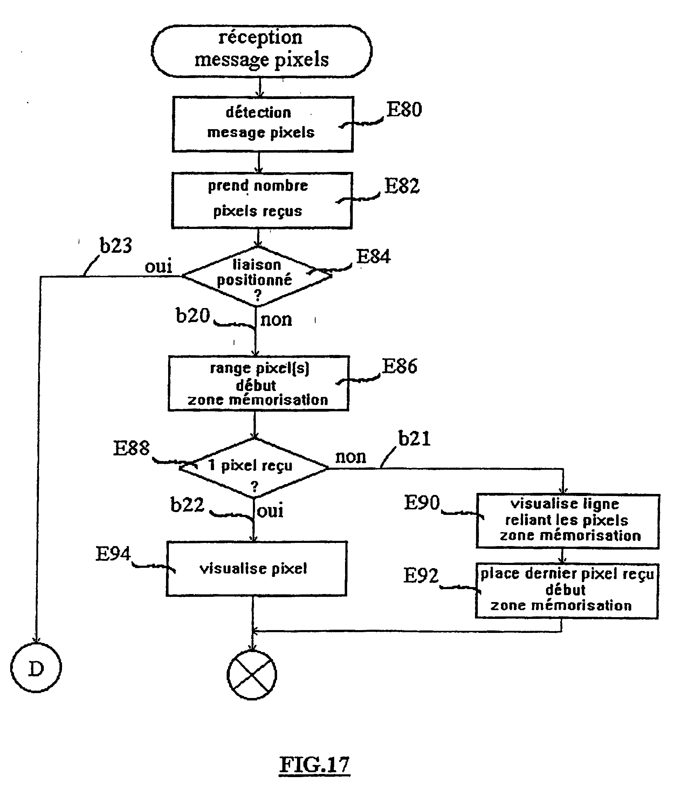

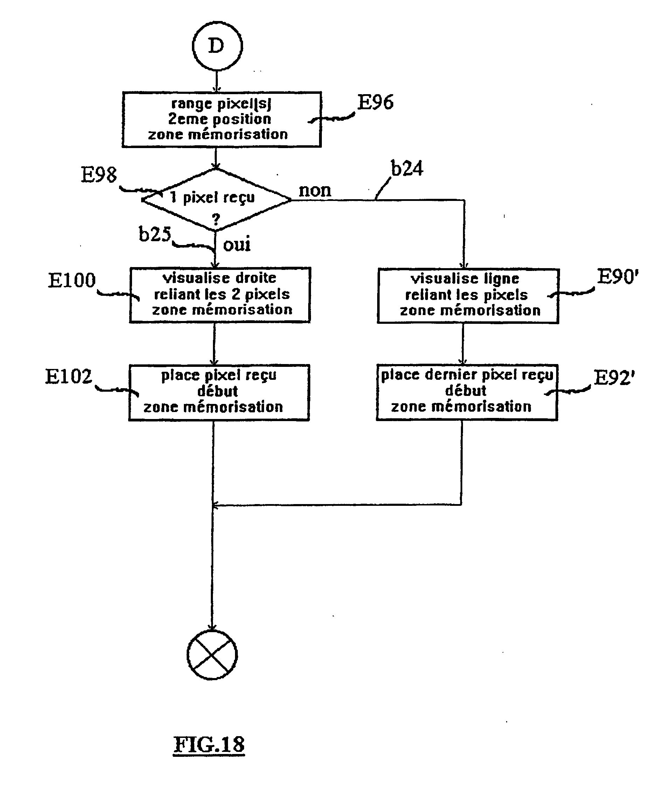

Ces opérations seront décrites par référence aux figures 17 et 18.

A la réception d'un message, le ou chaque moyen de réception destinataire (dénommé ci-après de manière générique terminal récepteur) analyse la nature du message : message commande. message pixel, etc. (figure 17, étape E80). Dans l'exemple, un message pixels est identifié par les bits D4-D7 du premier octet positionnés formant le profil binaire 0001.

On suppose que le message actuellement reçu est effectivement un message pixel, désigné MPk.

Le terminal récepteur lit alors dans les bits D0-D3 du premier octet du message pixels MPk (figure 6) le nombre mk de pixels qu'il contient (étape E82).

Ensuite, le terminal récepteur détermine si le premier pixel du message MPk doit être lié au dernier pixel du message MPk-1, d'après l'état logique du bit indicateur de liaison BL à l'emplacement D7 du troisième octet (étape E84).

## B.1. Affichage d'un message pixels dont le premier pixel n'est pas à lier au dernier pixel de message précédent.

Lorsqu'un message pixels MPk n'est pas à lier à un message pixels précédent MPk-1, s'agissant d'un premier message pixel d'un tracé (comme le pour le cas du message pixels MP1 relatif à la portion de tracé T1 de la figure 7), le terminal récepteur suit la procédure selon la branche b20 en stockant le ou les pixel(s) du message pixels MPk au début de la zone de mémorisation d'une mémoire de réception pixels MR (étape E86).

Le terminal récepteur détermine ensuite si un seul pixel a été ainsi reçu (étape E88). On suppose que le message comporte plusieurs pixels, cela étant le cas notamment pour le message pixels MP1.

Le terminal récepteur poursuit alors la procédure selon la branche b21 et exécute une routine de visualisation de la portion du tracé correspondant à ce message pixels MPk en reliant les pixels successifs de ce dernier (étape E90). Cette opération consiste à relier chaque espace entre deux pixels successifs par un segment de droite comme expliqué précédemment.

Le dernier pixel reçu du message MPk est maintenu dans la zone mémoire précitée, en première position (étape E92). En effet, les données contenues par ce dernier pixel sont nécessaires pour établir la liaison avec le premier pixel reçu d'un message pixels suivant MPk+1 si ce dernier est lié.

Une fois ces opérations terminées, le terminal se met en attente d'un nouveau message.

On note que dans l'hypothèse d'un message pixels MPk ne contenant qu'un seul pixel reçu (ainsi que déterminé à l'étape E88), cet unique pixel est affiché à la coordonnée correspondant de l'écran d'affichage (branche b22, étape E94) sans passer par les étapes E90 et E92 précitées.

## B.2. Affichage d'un message pixels dont le premier pixel est à lier au dernier pixel du message précédent.

On considérera maintenant le cas où le premier pixel du message reçu est à lier avec le dernier pixel du message précédent, s'agissant par exemple du deuxième message pixels MP2 de la figure 7. Ce message pixels sera désigné de manière générique comme MPk+1.

Le terminal récepteur procède par les étapes E80 à E84 comme expliqué précédemment (figure 17). A l'étape E84, le terminal récepteur poursuit la procédure par la branche b23 dont les étapes seront maintenant décrites par référence à la figure 18.

Le terminal récepteur range alors le ou les pixel(s) du message pixels MPk+1 à partir de la deuxième position de la zone de mémorisation de la mémoire de réception pixels MR (étape E96). On rappel en effet que, s'agissant d'un message pixels dont le premier pixel est à lier au dernier pixel du message pixel précédent MPk-1, la première position de la zone de mémorisation est déjà occupée par le dernier pixel de ce précédent message (cf. figure 17, étape E92).

Ensuite, le terminal récepteur détermine si le message reçu ne contient qu'un seul pixel (étape E98). On suppose que cela n'est pas le cas et le terminal récepteur procède donc selon la branche b24 dont la première étape consiste à visualiser la ligne reliant les pixels stockés dans la zone de mémorisation (étape E90'). Le terminal récepteur place ensuite le dernier pixel reçu au début de cette zone (étape E92') comme pour les étapes E90 et E92 précédemment décrites.

Dans l'hypothèse où le message pixels suivant MPk+1 ne devait contenir qu'un seul pixel, la zone mémoire ne contiendrait alors que le dernier pixel du message précédent (à la première position) et cet unique pixel du message pixels MPk+1 (à la deuxième position). Le terminal récepteur procéderait alors selon la branche b25 en visualisant la droite reliant ces deux pixels (étape E100) et placerait l'unique pixel sélectionné du message pixels MPk+1 au début de sa zone de mémorisation (étape E102).

On comprendra que la présente invention permet de nombreux modes de réalisation différents de celui décrit, et qu'elle peut être mise en oeuvre dans des domaines autres que celui de la télé-écriture, par exemple :

- au sein d'un écran interactif pour la gestion des données pixels transmis entre des moyens de saisie de coordonnées de désignation et l'écran de visualisation associé ;
- dans la transmission d'images sur une liaison quelconque, l'image étant décomposée en tracés formés de suites de pixels successifs : la sélection de ces pixels pour transmission s'effectuera conformément à l'invention ;
- dans un système de saisie de tracés où les tracés ne sont pas visualisés directement sur la surface de saisie, comme dans le cas d'un "plotter" : la sélection des pixels à transmettre pour permettre la visualisation ou le stockage en mémoire à distance de tracé s'effectuera conformément à l'invention.

Dans l'exemple, la période d'acquisition Tab correspond à 15 intervalles des saisie de coordonnées, et permet ainsi d'obtenir les 16 premiers pixels ou les 15 pixels successifs candidats à la sélection pour former un message pixels donné. Ce nombre relativement élevé résulte d'un intervalle court - de l'ordre d'une milliseconde - entre deux acquisitions de coordonnées.

Dans de nombreuses applications, on peut envisager un intervalle sensiblement plus long entre deux acquisitions de coordonnées, par exemple de l'ordre de 5 millisecondes. Dans ce cas, le nombre de pixels candidats à la sélection sera réduit à environ trois pour chaque période d'acquisition Tab. L'homme du métier comprendra aisément comment adapter l'exemple décrit à ces différents paramètres.

Applications industrielles : l'invention a des applications industrielles notamment dans des terminaux d'affichage et/ou de transmission de pixels.

**Revendications**

1. Procédé de transmission de pixels (P) à partir d'une succession de pixels acquis en entrée exprimant l'évolution d'un tracé (T1-T5), **caractérisé en ce que**, préalablement à la transmission des pixels (P), on élimine sélectivement des pixels de ladite succession de sorte que la séparation minimale (Sri; DXri, DYri) entre deux pixels successifs transmis (Pr et Pi) soit supérieure à un seuil déterminé (Smin; DXmin, DYmin).

2. Procédé selon la revendication 1, **caractérisé en ce que** l'on établit la position d'un pixel (P) selon des valeurs numériques associées à des paramètres correspondant d'un système de coordonnées, ladite séparation minimale (DXri, DYri) étant dépassée si la différence de valeurs entre deux pixels successifs (Pr et Pi) pour l'un desdits paramètres est supérieur à un seuil déterminé (DXmin, DYmin).

3. Procédé selon la revendication 2, **caractérisé en**

ce que lesdits paramètres sont les coordonnées X, Y d'un système de coordonnées, ladite séparation minimale (DXri ou DYri) étant dépassée si :

$$DXri = |Xar - Xai| > DXmin$$

ou

$$DYri = |Yar - Yai| > DYmin;$$

où Xar et Xai, sont respectivement les valeurs de la coordonnée X de deux pixels successifs (Pr et Pi), Yar et Yai sont respectivement les valeurs de la coordonnée Y de deux pixels successifs, et DXmin et DYmin sont respectivement le seuil déterminé pour la coordonnée X et la coordonnée Y.

4. Procédé selon l'une quelconque des revendications 1 à 3, **caractérisé en ce que** le seuil prédéterminé (Smin; DXmin, DYmin) est supérieur à n fois le pas élémentaire entre deux pixels adjacents dans le plan de coordonnées d'affichage de ces derniers, où n est un nombre entier égal ou supérieur à 1.

5. Procédé selon la revendication 4, **caractérisé en ce que** la valeur de n est égale ou supérieure à 2.

6. Procédé selon la revendication 4, **caractérisé en ce que** la valeur de n est égale ou supérieure à 4.

7. Procédé selon l'une quelconque des revendications 1 à 6, **caractérisé en ce que** les pixels (Pi) sont transmis en paquets (MPk) d'au moins un pixel, la période séparant l'acquisition du premier pixel (P1) de l'acquisition du dernier pixel (Pmk) du paquet étant égale ou inférieure à un seuil temporel prédéterminé (Tab).

8. Procédé selon la revendication 7, **caractérisée en ce que** le seuil temporel (Tab) est inférieur à la persistance rétinienne.

9. Procédé selon la revendication 7 ou 8, **caractérisé en ce que** le seuil temporel (Tab) est inférieur à 30 ms.

10. Procédé selon la revendication 8 ou 9, **caractérisé en ce que** le seuil temporel (Tab) est inférieur à 20 ms.

11. Procédé selon l'une quelconque des revendications 7 à 10, **caractérisé en ce que** chaque paquet de pixels (MPk) correspond à des pixels formant un élément de tracé ininterrompu.

12. Procédé selon l'une quelconque des revendications 7 à 11, **caractérisé en ce que** chaque paquet de pixels est formaté en message pixels (MPk) pouvant être traité de manière autonome pour la transmission et l'extraction de données à la réception.

13. Procédé selon la revendication 12, **caractérisé en ce que** ledit message pixels (MPk) comporte un champ d'identification (60) signifiant qu'il comporte des données pixels.

14. Procédé selon la revendication 12 ou 13, **caractérisé en ce que** ledit message pixels (MPk) comporte un champ nombre (62) spécifiant le nombre (mk) de pixels (P) contenus dans ledit message.

15. Procédé selon les revendications 13 ou 14, **caractérisé en ce que** le champ d'identification (60) et le champ nombre (62) constituent un en-tête (58) du message pixels (MPk).

16. Procédé selon l'une quelconque des revendications 12 à 15, **caractérisé en ce que** chaque message pixels (MPk) comporte une donnée (BL) indiquant si le premier pixel dudit message doit être lié au dernier pixel d'un message pixels précédent (MPk-1).

17. Procédé selon l'une quelconque des revendications 1 à 16, **caractérisé en ce que** chaque pixel transmis comporte un premier champ (52) indiquant s'il doit être relié à un pixel précédemment transmis, un deuxième champ (54) exprimant une première coordonnée (Xai) sur ledit plan d'affichage, et un troisième champ (56) exprimant une seconde coordonnée (Yai) sur ledit plan d'affichage.

18. Procédé selon la revendication 17, **caractérisé en ce que** le premier champ (52) est intégré à au moins un bit d'un octet destiné à exprimer une desdites première ou deuxième coordonnées.

19. Procédé selon l'une quelconque des revendications 1 à 18, **caractérisé en ce que** les pixels acquis en entrée sont gérés en groupes de pixels reçus successivement durant une période d'acquisition prédéterminée (Tab), et **en ce que** dans le cas d'un premier groupe de pixels pour'un tracé donné comportant le premier pixel (P1) d'un élément (T1) de début de tracé:

    a) on établit initialement ledit premier pixel comme pixel de référence (Pr) et les autres pixels (Pi) du groupe comme pixels candidats à la sélection pour transmission,
    b) on détermine, pour chaque pixel candidat successif du groupe, si la séparation entre le pixel de référence et le pixel candidat est supérieure à la distance seuil prédéterminée (Smin; DXmin, DYmin),

c) dans le cas où ladite séparation est inférieure à ladite distance seuil, on élimine ledit pixel candidat,
    d) dans le cas ou ladite séparation n'est pas inférieure audit seuil, on sélectionne ledit pixel candidat pour la transmission et on établit ce pixel candidat sélectionné comme nouveau pixel de référence pour l'étape b), et
    e) on transmet ensemble ledit premier pixel et le(s) pixel(s) candidat(s) sélectionné(s).

20. Procédé selon l'une quelconque des revendications 1 à 19, **caractérisé en ce que** les pixels acquis en entrée sont gérés en groupes de pixels reçus successivement durant une période d'acquisition prédéterminée (Tab), et **en ce que** dans le cas d'un groupe de pixels faisant suite à un précédent groupe de pixels sans discontinuité dans le tracé :

    a) on établit initialement le dernier pixel transmis dudit groupe précédent comme pixel de référence (Pr) et les pixels du groupe faisant suite comme pixels candidats à la sélection pour transmission,
    b) on détermine, pour chaque pixel candidat successif (Pi) du groupe actuel, si la séparation entre le pixel de référence et le pixel candidat est supérieure à la distance seuil prédéterminée (Smin; DXmin, DYmin),
    c) dans le cas où ladite séparation est inférieure à ladite distance seuil, on élimine ledit pixel candidat,
    d) dans le cas ou ladite séparation n'est pas inférieure à ladite distance seuil, on sélectionne ledit pixel candidat pour la transmission et on établit ce pixel candidat sélectionné comme nouveau pixel de référence pour l'étape b), et
    e) on transmet l'ensemble constitué du/des pixel(s) candidat(s) sélectionné(s) dudit groupe avec une indication de lier le premier pixel de l'ensemble transmis au dernier pixel du groupe précédent.

21. Procédé selon l'une quelconque des revendications 1 à 20, **caractérisé en ce que** les pixels acquis en entrée sont gérés par groupes de pixels reçus successivement durant une période d'acquisition prédéterminée (Tab) et **en ce que** dans le cas d'une succession de pixels interrompue de sorte qu'un seul pixel soit acquis durant la dernière période d'acquisition ayant été interrompue, ledit seul pixel est transmis systématiquement.

22. Procédé selon l'une quelconque des revendications 1 à 21, **caractérisé en ce que** ledit tracé est réalisé sur un écran interactif (6) comportant un écran de visualisation et un dispositif de saisie de coordonnées intégré audit écran, les pixels acquis en entrée étant obtenus à partir de données de positions fournies par ledit dispositif de saisie de coordonnées et le ou les pixel(s) transmis est/sont reçu(s) par l'écran de visualisation.

23. Procédé selon l'une quelconque des revendications 1 à 22, **caractérisé en ce que** les pixels transmis sont envoyés vers au moins un terminal récepteur (2) éloigné de la source (6) de pixels acquis en entrée.

24. Procédé selon la revendication 23, **caractérisé en ce que** les pixels transmis vers au moins un terminal récepteur transitent sur une liaison série, notamment une ligne téléphonique.

25. Procédé selon l'une quelconque des revendications 1 à 24, **caractérisé en ce qu'**il est utilisé pour relier au moins deux dispositifs de télé-écriture en communication.

26. Procédé selon l'une quelconque des revendications 7 à 25, **caractérisé en ce que** l'on intercale au moins un message comportant des données autres que des pixels (Pi) entre deux paquets de pixels (MPk), le dernier pixel de l'un étant à lier au premier pixel de l'autre pour exprimer un tracé continu.

27. Procédé de réception de pixels transmis sélectivement selon l'une quelconque des revendications 1 à 26, **caractérisé en ce qu'**il comprend les étapes de :

    a) réceptionner chaque pixel transmis;
    b) dans le cas d'une succession de pixels reçus, déterminer les pixels qui doivent être liés entre eux pour former un tracé continu; et
    c) pour chaque pixel devant être lié, créer un segment de droite reliant ce pixel au pixel précédent dans ladite succession afin de former un tracé continu entre lesdits pixels devant être liés.

28. Dispositif de transmission de pixels (P) à partir d'une succession de pixels acquis en entrée exprimant l'évolution d'un tracé (T1-T5), **caractérisé en ce qu'**il comprend :

    - des moyens (22) pour déterminer la séparation (Sri) spatiale entre des pixels successifs (Pr et Pi) de ladite succession; et
    - des moyens (22) pour éliminer sélectivement des pixels de ladite succession

    de sorte que la séparation minimale (Sri; DXri, DYri) entre deux pixels successifs transmis soit supérieure à un seuil déterminé (Smin; DXmin, DYmin).

29. Dispositif selon la revendication 28, **caractérisé en ce qu'**il comprend des moyens (22) pour établir la position d'un pixel selon des valeurs numériques associées à des paramètres correspondants d'un système de coordonnées, ladite séparation minimale étant dépassée si la différence de valeurs entre deux pixels successifs (Pr et Pi) pour l'un desdits paramètres est supérieure à un seuil déterminé (DXmin, DYmin) pour l'un de ces paramètres.

30. Dispositif selon la revendication 29, **caractérisé en ce que** lesdits paramètres sont les coordonnées X, Y d'un système de coordonnées, ladite séparation minimale DXri ou DYri étant dépassée si :

$$DXri = |Xr - Xi| > DXmin$$

ou

$$DYri = |Yr - Yi| > DYmin;$$

    où Xr et Xi, sont respectivement les valeurs de la coordonnée X de deux pixels successifs (Pr et Pi), Yr et Yi sont respectivement les valeurs de la coordonnée Y de deux pixels successifs, et DXmin et DYmin sont respectivement le seuil déterminé pour la coordonnée X et la coordonnée Y.

31. Dispositif selon l'une quelconque des revendications 28 à 30, **caractérisé en ce que** le seuil prédéterminé (Smin; DXmin, DYmin) est supérieur à n fois le pas élémentaire entre deux pixels adjacents dans le plan de coordonnées d'affichage de ces derniers, où n est un nombre entier égal ou supérieur à 1

32. Dispositif selon l'une quelconque des revendications 28 à 31, **caractérisé en ce qu'**il comprend des moyens de transmission des pixels (Pi) en paquets d'au moins un pixel (MPk), la période séparant l'acquisition du premier pixel (P1) de l'acquisition du dernier pixel (Pmk) du paquet étant égale ou inférieure à un seuil temporel prédéterminé (Tab).

33. Dispositif selon la revendication 32, **caractérisé en ce que** le seuil temporel (Tab) est inférieur à la persistance rétinienne.

34. Dispositif selon la revendication 32 ou 33, **caractérisé en ce que** chaque paquet de pixels correspond à des pixels formant un élément de tracé ininterrompu.

35. Dispositif selon l'une quelconque des revendications 32 à 34, **caractérisé en ce qu'**il comprend des moyens (22) pour formater chaque paquet de pixels en message pixels (MPk) pouvant être traité de manière autonome pour la transmission et l'extraction de données à la réception.

36. Dispositif selon la revendication 35, **caractérisé en ce que** ledit message pixels (MPk) comporte un champ d'identification (60) signifiant qu'il comporte des données pixels.

37. Dispositif selon la revendication 35 ou 36, **caractérisé en ce que** le message pixels (MPk) comporte un champ nombre (62) spécifiant le nombre (mk) de pixels (Pi) contenus dans ledit message.

38. Dispositif selon les revendications 36 ou 37, **caractérisé en ce que** le champ d'identification (60) et le champ nombre (62) constituent un en-tête du message pixels (MPk).

39. Dispositif selon l'une quelconque des revendications 35 à 38, **caractérisé en ce que** chaque message pixels (MPk) comporte une donnée (BL) indiquant si le premier pixel dudit message doit être lié au dernier pixel d'un message pixels précédent (MPk-1).

40. Dispositif selon l'une quelconque des revendications 28 à 39, **caractérisé en ce qu'**il comprend des moyens pour formater chaque pixel transmis selon un premier champ (52) indiquant s'il doit être relié à un pixel précédemment transmis, un deuxième champ (54) exprimant une première coordonnée (Xai) sur ledit plan d'affichage, et un troisième champ (56) exprimant une seconde coordonnée (Yai) sur un plan d'affichage.

41. Dispositif selon la revendication 40, **caractérisé en ce que** le premier champ (52) est intégré à au moins un bit d'un octet destiné à exprimer une desdites première ou deuxième coordonnées (Xai ou Yai).

42. Dispositif selon l'une quelconque des revendications 28 à 41, **caractérisé en ce qu'**il comporte des moyens (22) pour gérer les pixels acquis en entrée en groupes de pixels reçus successivement durant une période d'acquisition prédéterminée (Tab), et **en ce que** pour gérer le cas d'un premier groupe de pixels pour un tracé donné comportant le premier pixel (P1) d'un élément (T1) de début de tracé, lesdits moyens comprennent :

a) des moyens pour établir initialement ledit premier pixel comme pixel de référence (Pr) et les autres pixels de groupe comme pixels candidats à la sélection pour transmission,
b) des moyens pour déterminer, pour chaque pixel candidat successif, si la séparation entre le pixel de référence et le pixel candidat est supérieure à ladite distance seuil prédéterminée (Smin),
c) des moyens pour éliminer ledit pixel candidat dans le cas où ladite séparation est inférieure à ladite distance seuil,
d) des moyens pour sélectionner ledit pixel candidat pour la transmission et pour établir ce pixel candidat sélectionné comme nouveau pixel de référence dans le cas ou ladite séparation n'est pas inférieure audit seuil, et
e) des moyens (24) pour transmettre ensemble ledit premier pixel et les pixels candidats sélectionnés.

43. Dispositif selon l'une quelconque des revendications 28 à 42, **caractérisé en ce qu'**il comporte des moyens (22) pour gérer les pixels acquis en entrée en groupes de pixels reçus successivement durant une période d'acquisition prédéterminée (Tab), et **en ce que** pour gérer un groupe de pixels faisant suite à un précédent groupe de pixels sans discontinuité dans le tracé, lesdits moyens comprenant :

a) des moyens pour établir initialement le dernier pixel transmis dudit groupe précédent comme pixel de référence (Pr) et les pixels de groupe faisant suite comme pixels (Pi) candidats à la sélection pour transmission,
b) des moyens pour déterminer, pour chaque pixel candidat successif, si la séparation entre le pixel de référence et le pixel candidat est supérieure à la distance seuil prédéterminée (Smin),
c) des moyens pour éliminer ledit pixel candidat dans le cas où ladite séparation est inférieure à ladite distance seuil,
d) des moyens pour sélectionner ledit pixel candidat pour la transmission et pour établir ce pixel candidat sélectionné comme nouveau pixel de référence dans le cas ou ladite séparation n'est pas inférieure à ladite distance seuil, et
e) des moyens pour transmettre ensemble les pixels candidats sélectionnés dudit groupe avec une indication de lier le premier pixel de l'ensemble au dernier pixel du groupe précédent.

44. Dispositif selon l'une quelconque des revendications 28 à 43, **caractérisé en ce qu'**il comporte des moyens (22) pour gérer les pixels acquis en entrée par groupes de pixels reçus successivement durant une période d'acquisition prédéterminée (Tab), ces moyens agissant, lorsque la succession de pixels est interrompue de sorte qu'un seul pixel soit acquis après expiration de la dernière période d'acquisition, pour transmettre systématiquement ledit seul pixel.

**45.** Dispositif selon l'une quelconque des revendications 28 à 44, **caractérisé en ce qu'**il est relié à un écran interactif (6) comportant un écran de visualisation et un dispositif de saisie de coordonnées intégré audit écran, les pixels acquis en entrée étant obtenus à partir de données de positions fournies par ledit dispositif de saisie de coordonnées et le ou les pixel(s) transmis étant envoyé(s) vers l'écran de visualisation.

**46.** Dispositif selon l'une quelconque des revendications 28 à 45, **caractérisé en ce que** les pixels sélectionnés pour transmission sont transmis vers au moins un terminal récepteur (2) éloigné de la source (6) de pixels acquis en entrée.

**47.** Dispositif selon l'une quelconque des revendications 28 à 46, **caractérisé en ce qu'**il comporte des moyens pour envoyer les pixels transmis vers au moins un terminal récepteur (2) éloigné de la source (6) de pixels acquis en entrée.

**48.** Dispositif de télé-écriture (2) comportant un dispositif de transmission de pixels selon l'une quelconque des revendications 28 à 47.

**49.** Dispositif selon l'une quelconque des revendications 28 à 48, **caractérisé en ce qu'**il comprend en outre des moyens pour intercaler au moins un message comportant des données autres que des pixels (Pi) entre deux paquets de pixels (MPk), le dernier pixel de l'un étant à lier au premier pixel de l'autre pour exprimer un tracé continu.

**50.** Dispositif de réception de pixels transmis sélectivement selon l'une quelconque des revendications 28 à 49, **caractérisé en ce qu'**il comprend :

a) des moyens pour réceptionner chaque pixel transmis;
b) des moyens pour déterminer, dans le cas d'une succession de pixels reçus, les pixels qui doivent être liés entre eux pour former un tracé continu; et
c) des moyens pour créer, pour chaque pixel devant être lié, un segment de droite reliant ce pixel au pixel précédent dans ladite succession afin de former un tracé continu entre lesdits pixels devant être liés.

**Claims**

**1.** Process for transmission of pixels (P) from a sequence of pixels acquired at input expressing the evolution of a line (T1-T5), **characterised by** the fact that, prior to the transmission of the pixels (P), pixels are selectively eliminated from the said sequence so that the minimum separation (Sri; DXri, DYri) between two successive pixels transmitted (Pr and Pi) is greater than a determined threshold (Smin; DXmin; DYmin).

**2.** Process as described in claim 1, **characterised by** the fact that the position of a pixel (P) is established in accordance with numeric values associated with corresponding parameters of a system of co-ordinates, the said minimum separation (DXri, DYri) being exceeded if the difference in values between two successive pixels (Pr and Pi) for one of the said parameters is greater than a determined threshold (DXmin, DYmin).

**3.** Process as described in claim 2, **characterised by** the fact that the said parameters are the co-ordinates X, Y of a system of co-ordinates, the said minimum separation (DXri or DYri) being exceeded if:

$$DXri = |Xar\text{-}Xai| > DXmin$$

or

$$DYri = |Yar\text{-}Yai| > DYmin;$$

where Xar and Xai are respectively the values of the co-ordinate X of two successive pixels (Pr and Pi), Yar and Yai are respectively the values of the co-ordinate Y of two successive pixels, and DXmin and DYmin are respectively the threshold determined for the co-ordinate X and the co-ordinate Y.

**4.** Process as described in any one of claims 1 to 3, **characterised by** the fact that the predetermined threshold (Smin; DXmin, DYmin) is greater than n times the elementary pitch between two adjacent pixels in the plane of their display co-ordinates, where n is a whole number equal to or greater than 1.

**5.** Process as described in claim 4, **characterised by** the fact that the value of **n** is equal to or greater than 2.

**6.** Process as described in claim 4, **characterised by** the fact that the value of **n** is equal to or greater than 4.

**7.** Process as described in any one of claims 1 to 6, **characterised by** the fact that the pixels (Pi) are transmitted in packets (MPk) of at least one pixel, the period separating acquisition of the first pixel (P1) from the acquisition of the last pixel (Pmk) of the packet being equal to or less than a predetermined time threshold (Tab).

**8.** Process as described in claim 7, *characterised by the fact that* the time threshold (Tab) is less than retinal persistence.

**9.** Process as described in claim 7 or 8, *characterised by the fact that* the time threshold (Tab) is less than 30 ms.

**10.** Process as described in claim 8 or 9, *characterised by the fact that* the time threshold (Tab) is less than 20 ms.

**11.** Process as described in any one of claims 7 to 10, *characterised by the fact that* each packet of pixels (MPk) corresponds to pixels forming an interrupted line element.

**12.** Process as described in any one of claims 7 to 11, *characterised by the fact that* each packet of pixels is formatted as a pixels message (MPk) able to be processed independently for transmission and data extraction on reception.

**13.** Process as described in claim 12, *characterised by the fact that* the said pixels message (MPk) includes an identification field (60) signifying that it includes pixels data.

**14.** Process as described in claim 12 or 13, *characterised by the fact that* the said pixels message (MPk) includes a number field (62) specifying the number (mk) of pixels (P) contained in the said message.

**15.** Process as described in claims 13 or 14, *characterised by the fact that* the identification field (60) and the number field (62) constitute a header (58) of the pixels message (MPk).

**16.** Process as described in any one of claims 12 to 15, *characterised by the fact that* each pixels message (MPk) includes data (BL) indicating whether the first pixel of the said message must be linked to the last pixel of a preceding pixels message (MPk-1).

**17.** Process as described in any one of claims 1 to 16, *characterised by the fact that* each pixel transmitted includes a first field (52) indicating whether it must be linked to a previously transmitted pixel, a second field (54) expressing a first co-ordinate (Xai) on the said display plane, and a third field (56) expressing a second co-ordinate (Yai) on the said display plane.

**18.** Process as described in claim 17, *characterised by the fact* that the first field (52) is integrated with at least one bit of a byte intended to express one of the said first or second co-ordinates.

**19.** Process as described in any one of claims 1 to 18, *characterised by the fact that* the pixels acquired at input are managed in groups of pixels received in succession during a predetermined acquisition period (Tab), and by the fact that in the case of a first group of pixels for a given line including the first pixel (P1) of an element (T1) at the start of line:

a) the said first pixel is initially established as reference pixel (Pr) and the other pixels (Pi) of the group as candidate pixels for selection for transmission,

b) for each successive candidate pixel of the group, it is determined whether the separation between the reference pixel and the candidate pixel is greater than the predetermined threshold distance (Smin; DXmin, DYmin),

c) where the said separation is less than the said threshold distance, the said candidate pixel is eliminated,

d) where the said separation is not less than the said threshold, the said candidate pixel is selected for transmission and this selected candidate pixel is established as a new reference pixel for step b), and

e) the said first pixel and the selected candidate pixel(s) are transmitted together.

**20.** Process as described in any one of claims 1 to 19, *characterised by the fact that* the pixels acquired at input are managed in groups of pixels received in succession during a predetermined acquisition period (Tab) and by the fact that in the case of a group of pixels following a preceding group of pixels without discontinuity in the line:

a) the last transmitted pixel of the said preceding group is initially established as reference pixel (Pr) and the pixels of the following group as candidate pixels for selection for transmission,

b) for each successive candidate pixel (Pi) of the current group, it is determined whether the separation between the reference pixel and the candidate pixel is greater than the predetermined threshold distance (Smin; DXmin, DYmin),

c) where the said separation is less than the said threshold distance, the said candidate pixel is eliminated,

d) where the said separation is not less than the said threshold distance, the said candidate pixel is selected for transmission and this selected candidate pixel is established as a new reference pixel for step b), and

e) the assembly formed of the selected candidate pixel(s) of the said group is transmitted with an indication to link the first pixel of the assembly transmitted to the last pixel of the preceding group.

21. Process as described in any one of claims 1 to 20, *characterised by* the *fact that* the pixels acquired at input are managed in groups of pixels received in succession during a predetermined acquisition period (Tab) and by the fact that in the case of a sequence of pixels interrupted so that a single pixel is acquired during the last acquisition period interrupted, the said single pixel is transmitted systematically.

22. Process as described in any one of claims 1 to 21, *characterised by* the fact that the said line is created on an interactive screen (6) including a display screen and a device for inputting co-ordinates integrated with the said screen, the pixels acquired at input being obtained from position data provided by the said co-ordinate input device and the pixel(s) transmitted is/are received by the display screen.

23. Process as described in any one of claims 1 to 22, *characterised by* the fact that the pixels transmitted are sent to at least one reception terminal (2) remote from the source (6) of pixels acquired at input.

24. Process as described in claim 23, *characterised by* the fact that the pixels transmitted to at least one reception terminal pass through a serial connection, in particular a telephone line.

25. Process as described in any one of claims 1 to 24, *characterised by* the fact that it is used to connect at least two telewriter devices in communication.

26. Process as described in any one of claims 7 to 25, *characterised by* the fact that at least one message including data other than pixels (Pi) is intercalated between two packets of pixels (MPk), the last pixel of one being to be linked to the first pixel of the other to express a continuous line.

27. Process for reception of pixels transmitted selectively as described in any one of claims 1 to 26, *characterised by* the fact that it comprises the steps of:

a) receiving each pixel transmitted;

b) in the case of a sequence of received pixels, determining the pixels which must be linked together to form a continuous line; and

c) for each pixel having to be linked, creating a straight line segment linking this pixel to the preceding pixel in the said sequence in order to form a continuous line between the said pixels having to be linked.

28. Device for transmission of pixels (P) from a sequence of pixels acquired at input expressing the evolution of a line (T1-T5), *characterised by* the *fact that* it comprises:

- means (22) for determining the spatial separation (Sri) between successive pixels (Pr and Pi) of the said sequence, and

- means (22) for selectively eliminating pixels from the said sequence

so that the minimum separation (Sri; DXri, DYri) between two successive transmitted pixels is greater than a pre-determined threshold (Smin; DXmin, DYmin).

29. Device as described in claim 28, *characterised by the fact that* it comprises means (22) for establishing the position of a pixel in accordance with numeric values associated with corresponding parameters of a system of co-ordinates, the said minimum separation being exceeded if the difference in values between two successive pixels (Pr and Pi) for one of the said parameters is greater than a determined threshold (DXmin, DYmin) for one of these parameters.

30. Device as described in claim 29, *characterised by the fact that* the said parameters are the co-ordinates X, Y of a system of co-ordinates, the said minimum separation DXri or DYri being exceeded if:

$$DXri = |Xr-Xi| > DXmin$$

or

$$DYri = |Yr-Yi| > DYmin;$$

where Xr and Xi are respectively the values of the co-ordinate X of two successive pixels (Pr and Pi), Yr and Yi are respectively the values of the co-ordinate Y of two successive pixels, and DXmin and DYmin are respectively the threshold determined for the co-ordinate X and the co-ordinate Y.

**31.** Device as described in any one of claims 28 to 30, *characterised by* the fact that the predetermined threshold (Smin; DXmin, DYmin) is greater than n times the elementary pitch between two adjacent pixels in the plane of their display co-ordinates, where n is a whole number equal to or greater than 1.

**32.** Device as described in any one of claims 28 to 31, *characterised by* the fact that it includes means for transmission of the pixels (Pi) in packets of at least one pixel (MPk), the period separating acquisition of the first pixel (P1) from the acquisition of the last pixel (Pmk) of the packet being equal to or less than a predetermined time threshold (Tab).

**33.** Device as described in claim 32, *characterised by* the fact that the time threshold (Tab) is less than retinal persistence.

**34.** Device as described in claim 32 or 33, *characterised by* the fact that each packet of pixels corresponds to pixels forming an interrupted line element.

**35.** Device as described in any one of claims 32 to 34, *characterised by* the fact that it includes means (22) for formatting each packet of pixels as a pixels message (MPk) able to be processed independently for transmission and data extraction on reception.

**36.** Device as described in claim 35, *characterised by* the fact that the said pixels message (MPk) includes an identification field (60) signifying that it includes pixels data.

**37.** Device as described in claim 35 or 36, *characterised by* the fact that the pixels message (MPk) includes a number field (62) specifying the number (mk) of pixels (Pi) contained in the said message.

**38.** Device as described in claims 36 or 37, *characterised by* the fact that the identification field (60) and the number field (62) constitute a header of the pixels message (MPk).

**39.** Device as described in any one of claims 35 to 38, *characterised by* the fact that each pixels message (MPk) includes data (BL) indicating whether the first pixel of the said message must be linked to the last pixel of a preceding pixels message (MPk-1).

**40.** Device as described in any one of claims 28 to 39, *characterised by* the fact that it includes means for formatting each pixel transmitted with a first field (52) indicating whether it must be linked to a previously transmitted pixel, a second field (54) expressing a first co-ordinate (Xai) on the said display plane, and a third field (56) expressing a second co-ordinate (Yai) on a display plane.

**41.** Device as described in claim 40, *characterised by* the fact that the first field (52) is integrated with at least one bit of a byte intended to express one of the said first or second co-ordinates (Xai or Yai).

**42.** Device as described in any one of claims 28 to 41, *characterised by* the fact that it includes means (22) for managing the pixels acquired at input in groups of pixels received in succession during a predetermined acquisition period (Tab), and by the fact that to manage the case of a first group of pixels for a given line including the first pixel (P1) of an element (T1) at the start of line, the said means comprise:

a) means for initially establishing the said first pixel as reference pixel (Pr) and the other pixels of the group as. candidate pixels for selection for transmission,

b) means for determining, for each successive candidate pixel, whether the separation between the reference pixel and the candidate pixel is greater than the said predetermined threshold distance (Smin),

c) means for eliminating the said candidate pixel where the said separation is less than the said threshold distance,

d) means for selecting the said candidate pixel for transmission and for establishing this selected candidate pixel as a new reference pixel where the said separation is not less than the said threshold, and

e) means (24) for transmitting the said first pixel and the selected candidate pixels together.

**43.** Device as described in any one of claims 28 to 42, *characterised by* the fact that it includes means (22) for managing the pixels acquired at input in groups of pixels received in succession during a predetermined acquisition period (Tab) and by the fact that to manage a group of pixels following a preceding group of pixels without discontinuity in the line, the said means comprising:

a) means for initially establishing the last transmitted pixel of the said preceding group as reference pixel (Pr) and the pixels of the following group as candidate pixels (Pi) for selection for transmission,

b) means for determining, for each successive candidate pixel, whether the separation between the reference pixel and the candidate pixel is greater than the predetermined threshold distance (Smin),

c) means for eliminating the said candidate pixel where the said separation is less than the said threshold distance,

d) means for selecting the said candidate pixel for transmission and for establishing this selected candidate pixel as the new reference pixel where the said separation is not less than the said threshold distance, and

e) means for transmitting together the selected candidate pixels of the said group is transmitted with an indication to link the first pixel of the assembly transmitted to the last pixel of the preceding group.

44. Device as described in any one of claims 28 to 43, **characterised by** the fact that it includes means (22) for managing the pixels acquired at input in groups of pixels received in succession during a predetermined acquisition period (Tab), these means acting, when the sequence of pixels is interrupted so that a single pixel is acquired after expiry of the last acquisition period, to systematically transmit the said single pixel.

45. Device as described in any one of claims 28 to 44, **characterised by** the fact that it is connected to an interactive screen (6) including a display screen and a device for inputting co-ordinates integrated with the said screen, the pixels acquired at input being obtained from position data provided by the said co-ordinate input device and the pixel(s) transmitted being sent to the display screen.

46. Device as described in any one of claims 28 to 45, **characterised by** the fact that the pixels selected for transmission are transmitted to at least one reception terminal (2) remote from the source (6) of pixels acquired at input.

47. Device as described in any one of claims 28 to 46, **characterised by** the fact that it includes means for sending the transmitted pixels to at least one reception terminal (2) remote from the source (6) of pixels acquired at input.

48. Telewriting device (2) including a device for transmission of pixels as described in any one of claims 28 to 47.

49. Device as described in any one of claims 28 to 48, **characterised by** the fact that it also comprises means for intercalating at least one message including data other than pixels (Pi) between two packets of pixels (MPk), the last pixel of one being to be linked to the first pixel of the other to express a continuous line.

50. Device for reception of pixels transmitted selectively as described in any one of claims 28 to 49, **characterised by** the fact that it comprises:

a) means for receiving each pixel transmitted;

b) means for determining, in the case of a sequence of pixels received, the pixels which must be linked together to form a continuous line; and

c) means for creating, for each pixel having to be linked, a straight line segment linking this pixel to the preceding pixel in the said sequence in order to form a continuous line between the said pixels having to be linked.

## Patentansprüche

1. Verfahren zum Übertragen von Pixeln (P) ausgehend von einer Folge von eingangsseitig erfaßten Eingangspixeln, die den Verlauf einer Linie (T1-T5) darstellen, **dadurch gekennzeichnet, daß** Pixel der Folge vor der Übertragung der Pixel (P) selektiv derart eliminiert werden, daß der minimale Abstand (Sri; DXri, DYri) zwischen zwei aufeinanderfolgenden übertragenen Pixeln (Pr und Pi) größer als eine bestimmte Schwelle (Smin; Dxmin, DYmin) ist.

2. Verfahren nach Anspruch 1, **dadurch gekennzeichnet, daß** die Position eines Pixels (P) gemäß numerischen Werten festgelegt wird, die Parametern zugeordnet sind, die einem Koordinatensystem entsprechen, wobei der minimale Abstand (DXri, DYri) überschritten ist, falls der Unterschied der Werte zwischen zwei aufeinanderfolgenden Pixeln (Pr und Pi) für einen der Parameter größer als eine bestimmte Schwelle (DXmin, DYmin) ist.

3. Verfahren nach Anspruch 2, **dadurch gekennzeichnet, daß** die Parameter die Koordinaten X, Y eines Koordinatensystems sind, wobei der minimale Abstand (DXri oder DYri) überschritten ist, falls:

$$DXri = | Xar - Xai | > DXmin$$

oder

$$DYri = | Yar - Yai | > DYmin;$$

wobei Xar und Xai jeweils die Werte der Koordinate X der beiden aufeinanderfolgenden Pixel (Pr und Pi), Yar und Yai jeweils die Werte der Koordinate Y der beiden aufeinanderfolgenden Pixel und DXmin sowie DYmin jeweils die bestimmte Schwelle für die Koordinate X und die Koordinate Y sind.

4. Verfahren nach einem der Ansprüche 1 bis 3, **dadurch gekennzeichnet, daß** die vorbestimmte Schwelle (Smin; DXmin, DYmin) größer als das n-fache des Elementarschritts zwischen zwei benachbarten Pixeln in der Koordinatenanzeigeebene dieser letzteren ist, wobei n eine ganze Zahl gleich oder größer 1 ist.

5. Verfahren nach Anspruch 4, **dadurch gekennzeichnet, daß** der Wert für n gleich oder größer 2 ist.

6. Verfahren nach Anspruch 4, **dadurch gekennzeichnet, daß** der Wert für n gleich oder größer 4 ist.

7. Verfahren nach einem der Ansprüche 1 bis 6, **dadurch gekennzeichnet, daß** die Pixel (Pi) in Paketen (MPk) mit wenigstens einern Pixel übertragen werden, wobei der Zeitabschnitt zwischen dem Erhalt des ersten Pixels (P1) und dem Erhalt des letzten Pixels (Pmk) des Pakets gleich oder kleiner einer vorbestimmten zeitlichen Schwelle (Tab) ist.

8. Verfahren nach Anspruch 7, **dadurch gekennzeichnet, daß** die zeitliche Schwelle (Tab) kleiner als die Netzhautträgheit oder -persistenz ist.

9. Verfahren nach Anspruch 7 oder 8, **dadurch gekennzeichnet, daß** die zeitliche Schwelle (Tab) kleiner 30 ms ist.

10. Verfahren nach Anspruch 8 oder 9, **dadurch gekennzeichnet, daß** die zeitliche Schwelle (Tab) kleiner 20 ms ist.

11. Verfahren nach einem der Ansprüche 7 bis 10, **dadurch gekennzeichnet, daß** jedes Pixelpaket (MPk) den Pixeln entspricht, die ein unterbrochenes Linienelement bilden.

12. Verfahren nach einem der Ansprüche 7 bis 11, **dadurch gekennzeichnet, daß** jedes Pixelpaket in eine Pixelnachricht (MPk) formatiert wird, die für die Übertragung und das Auslesen von Daten beim Empfang unabhängig verarbeitet werden kann.

13. Verfahren nach Anspruch 12, **dadurch gekennzeichnet, daß** die Pixelnachricht (MPk) ein Identifikationsfeld (60) umfaßt, das anzeigt, daß Pixeldaten enthalten sind.

14. Verfahren nach Anspruch 12 oder 13, **dadurch gekennzeichnet, daß** die Pixelnachricht (MPk) eine Feldzahl (62) umfaßt, welche die Anzahl (mk) der Pixel (P) angibt, die in der Nachricht enthalten sind.

15. Verfahren nach Anspruch 13 oder 14, **dadurch gekennzeichnet, daß** das Identifikationsfeld (60) und die Feldzahl (62) einen Kopf (58) für die Pixelnachricht (MPk) bilden.

16. Verfahren nach einem der Ansprüche 12 bis 15, **dadurch gekennzeichnet, daß** jede Pixelnachricht (MPk) eine Größe (BL) umfaßt, die angibt, ob das erste Pixel der Nachricht mit dem letzten Pixel einer vorangegangenen Pixelnachricht (MPk-1) verbunden sein muß.

17. Verfahren nach einem der Ansprüche 1 bis 16, **dadurch gekennzeichnet, daß** jedes übertragene Pixel ein erstes Feld (52), das angibt, ob es mit einem vorher übertragenen Pixel verbunden werden muß, ein zweites Feld (54), das eine erste Koordinate (Xai) an der Anzeigeebene ausdrückt, und ein drittes Feld (56) umfaßt, das eine zweite Koordinate (Yai) an der Anzeigeebene ausdrückt.

18. Verfahren nach Anspruch 17, **dadurch gekennzeichnet, daß** das erste Feld (52) in zumindest einem Bit eines Bytes integriert ist, das zum Ausdrükken entweder der ersten oder zweiten Koordinate bestimmt ist.

19. Verfahren nach einem der Ansprüche 1 bis 18, **dadurch gekennzeichnet, daß** die eingangsseitig crhaltenen Pixel in Gruppen von Pixeln verwaltet werden, die nacheinander während eines vorbestimmten Erfassungszeitabschnitts (Tab) empfangen werden, und daß bei einer ersten Pixelgruppe für eine gegebene Linie mit dem ersten Pixel (P1) eines Empfangslinienelements (T1):

a) eingangsseitig das erste Pixel als Bezugspixel (Pr) und die anderen Pixel (Pi) der Gruppe als Kandidatenpixel bei der Auswahl für die Übertragung festgelegt werden,
b) für jedes folgende Kandidatenpixel der Gruppe bestimmt wird, ob der Abstand zwischen dem Bezugspixel und dem Kandidatenpixel größer als der vorbestimmte Schwellenabstand (Smin; DXmin, DYmin) ist,
c) das Kandidatenpixel eliminiert wird, falls der Abstand kleiner als der Schwellenabstand ist,
d) das Kandidatenpixel für die Übertragung ausgewählt wird, falls der Abstand nicht kleiner als die Schwelle ist, und dieses ausgewählte Kandidatenpixel als neues Bezugspixel für den Verfahrensschritt b) festgelegt wird, und
e) das erste Pixel und das (die) gewählte(n) Kandidatenpixel gemeinsam übertragen werden.

20. Verfahren nach einem der Ansprüche 1 bis 19, **dadurch gekennzeichnet, daß** die eingangsseitig erhaltenen Pixel in Gruppen von Pixeln verwaltet werden, die nacheinander während eines vorbestimmten Erfassungszeitabschnitts (Tab) empfangen werden, und daß bei einer einer vorangegangenen Pixelgruppe ohne Unterbrechung in der Linie folgenden Pixelgruppe:

a) eingangsseitig das erste übertragene Pixel der vorangegangenen Gruppe als Bezugspixel (Pr) und die folgende Pixelgruppe als Kandidatenpixel bei der Auswahl zur Übertragung festgelegt werden,
b) für jedes folgende Kandidatenpixel (Pi) der aktuellen Gruppe bestimmt wird, ob der Abstand zwischen dem Bezugspixel und dem Kandidatenpixel größer als der vorbestimmte Schwellenabstand (Smin; DXmin, DYmin) ist,
c) das Kandidatenpixel eliminiert wird, falls der Abstand kleiner als der Schwellenabstand ist,
d) das Kandidatenpixel für die Übertragung ausgewählt wird, falls der Abstand nicht kleiner als der Schwellenabstand ist, und dieses ausgewählte Kandidatenpixel als neues Bezugspixel für den Verfahrensschritt b) festgelegt wird, und
e) die Gesamtheit aus dem/den ausgewählten Kandidatenpixel(n) der Gruppe mit einem Hinweis übertragen wird, daß das erste Pixel der übertragenen Gesamtheit mit dem letzten Pixel der vorangegangenen Gruppe verbunden wird.

21. Verfahren nach einem der Ansprüche 1 bis 20, **dadurch gekennzeichnet, daß** die eingangsseitig erhaltenen Pixel in Gruppen von Pixeln verwaltet werden, die nacheinander während eines vorbestimmten Erfassungszeitabschnitts (Tab) empfangen werden, und daß bei einer Pixelfolge, die derart unterbrochen ist, daß ein einziges Pixel während des letzten unterbrochenen Erfassungszeitabschnitts erhalten wird, das einzige Pixel systematisch übertragen wird.

22. Verfahren nach einem der Ansprüche 1 bis 21, **dadurch gekennzeichnet, daß** die Linie auf einem interaktiven Schirm (6) realisiert wird, der einen Bildschirm und eine in dem Schirm integrierte Vorrichtung zum Erfassen von Koordinaten umfaßt, wobei die eingangsseitig erhaltenen Pixel ausgehend von Positionsdaten, die von der Vorrichtung zum Erfassen von Koordinaten geliefert werden, erhalten werden, und das oder die Pixel von dem Bildschirm empfangen wird/werden.

23. Verfahren nach einem der Ansprüche 1 bis 22, **dadurch gekennzeichnet, daß** die übertragenen Pixel wenigstens einem Empfangsterminal (2) zugesandt werden, der von der Quelle (6) der eingangsseitig erhaltenen Pixel entfernt ist.

24. Verfahren nach Anspruch 23, **dadurch gekennzeichnet, daß** die zum Empfangsterminal gesandten Pixel über eine serielle Verbindung, insbesondere eine Telefonleitung, übertragen werden.

25. Verfahren nach einem der Ansprüche 1 bis 24, **dadurch gekennzeichnet, daß** es zum Verbinden wenigstens zweier Fernschreibgeräte verwendet wird.

26. Verfahren nach einem der Ansprüche 7 bis 25, **dadurch gekennzeichnet, daß** zumindest eine Nachricht mit Daten, die sich von den Pixeln (Pi) unterscheiden, zwischen zwei Pixelpaketen (MPk) zwischengeschaltet wird, wobei das letzte Pixel von dem einen mit dem ersten Pixel von dem anderen verbunden wird, um eine kontinuierliche Linie anzugeben.

27. Verfahren zum Empfangen von Pixeln, die selektiv gemäß einem der Ansprüche 1 bis 26 übertragen werden, **dadurch gekennzeichnet, daß**:

a) jedes übertragene Pixel empfangen wird;
b) bei einer Folge von empfangenen Pixeln die Pixel bestimmt werden, die miteinander verbunden werden müssen, um eine kontinuierliche Linie zu bilden; und
c) für jedes zu verbindende Pixel ein Streckensegment erzeugt wird, das dieses Pixel mit dem vorangegangenen Pixel in der Folge verbindet, um eine kontinuierliche Linie zwischen den beiden zu verbindenden Pixeln zu bilden.

28. Vorrichtung zum Übertragen von Pixeln (P) ausgehend von einer Folge von eingangsseitig erhaltenen Pixeln, die den Verlauf einer Linie (T1-T5) angeben, **dadurch gekennzeichnet, daß** sie umfaßt:

- eine Einrichtung (22) zum Bestimmen des räumlichen Abstands (Sri) zwischen den aufeinanderfolgenden Pixeln (Pr und Pi) der Folge; und
- eine Einrichtung (22) zum selektiven Eliminieren von Pixeln der Folge, so daß der minimale Abstand (Sri; DXri, DYri) zwischen den beiden aufeinanderfolgenden übertragenen Pixeln größer als eine bestimmte Schwelle (Smin, DXmin, DYmin) ist.

29. Vorrichtung nach Anspruch 28, **dadurch gekennzeichnet, daß** sie eine Einrichtung (22) zum Festlegen der Position eines Pixels gemäß numerischen Werten umfaßt, die Parametern zugeordnet sind, die einem Koordinatensystem entsprechen, wobei der minimale Abstand überschritten ist, falls die Wertedifferenz zwischen zwei aufeinanderfolgenden Pixeln (Pr und Pi) für einen der Parameter größer als eine bestimmte Schwelle (DXmin, DYmin) für einen dieser Parameter ist

30. Vorrichtung nach Anspruch 29, **dadurch gekennzeichnet, daß** die Parameter die Koordinaten X, Y eines Koordinatensystems sind, wobei der minimale Abstand DXri oder DYri überschritten ist, falls:

$$DXri = |\,Xr - Xi\,| > DXmin$$

oder

$$DYri = |\,Yr - Yi\,| > DYmin;$$

wobei Xr und Xi jeweils die Werte der Koordinate X der beiden aufeinanderfolgenden Pixel (Pr und Pi), Yr und Yi jeweils die Werte der Koordinate Y der beiden aufeinanderfolgenden Pixel und DXmin und DYmin jeweils die bestimmte Schwelle für die Koordinate X und die Koordinate Y sind.

31. Vorrichtung nach einem der Ansprüche 28 bis 30, **dadurch gekennzeichnet, daß** die vorbestimmte Schwelle (Smin; DXmin, DYmin) größer als das n-fache des Elementarschritts zwischen zwei benachbarten Pixeln in der Anzeigenkoordinatenebene der letzten ist, wobei n eine ganze Zahl gleich oder größer als 1 ist.

32. Vorrichtung nach einem der Ansprüche 28 bis 31, **dadurch gekennzeichnet, daß** sie eine Einrichtung zum Tragen von Pixeln (Pi) in Paketen mit wenigstens einem Pixel (MPk) umfaßt, wobei der Zeitabschnitt zwischen dem Erhalt des ersten Pixels (P1) und dem Erhalt des letzten Pixels (Pmk) des Pakets gleich oder kleiner als eine vorbestimmte zeitliche Schwelle (Tab) ist.

33. Vorrichtung nach Anspruch 32, **dadurch gekennzeichnet, daß** die zeitliche Schwelle (Tab) kleiner als die Netzhautpersistenz oder -trägheit ist.

34. Vorrichtung nach Anspruch 32 oder 33, **dadurch gekennzeichnet, daß** jedes Pixelpaket Pixeln entspricht, die ein unterbrochenes Linienelement bilden.

35. Vorrichtung nach einem der Ansprüche 32 bis 34, **dadurch gekennzeichnet, daß** sie eine Einrichtung (22) zum Formatieren jedes Pixelpakets in eine Pixelnachricht (MPk) umfaßt, die zur Übertragung und zum Auslesen von Daten beim Empfang unabhängig verarbeitet werden kann.

36. Vorrichtung nach Anspruch 35, **dadurch gekennzeichnet, daß** die Pixelnachricht (MPk) ein Identifikationsfeld (60) umfaßt, das andeutet, daß es Pixeldaten umfaßt.

37. Vorrichtung nach Anspruch 35 oder 36, **dadurch gekennzeichnet, daß** die Pixelnachricht (MPk) eine Feldzahl (62) umfaßt, die die Anzahl (mk) von Pixeln (Pi) angibt, die in der Nachricht enthalten sind.

38. Vorrichtung nach Anspruch 36 oder 37, **dadurch gekennzeichnet, daß** das Identifikationsfeld (60) und die Feldzahl (62) einen Kopf für die Pixelnachricht (MPk) bilden.

39. Vorrichtung nach einem der Ansprüche 35 bis 38, **dadurch gekennzeichnet, daß** jede Pixelnachricht (MPk) eine Größe (BL) umfaßt, die angibt, ob das erste Pixel der Nachricht mit dem letzten Pixel einer vorangegangenen Pixelnachricht (MPk-1) verbunden werden muß.

40. Vorrichtung nach einem der Ansprüche 28 bis 39, **dadurch gekennzeichnet, daß** sie eine Einrichtung zum Formatieren jedes Pixels umfaßt, das gemäß einem ersten Feld (52), das angibt, ob es mit einem vorangegangenen übertragenen Pixel verbunden werden muß, einem zweiten Feld (54), das eine erste Koordinate (Xai) auf der Anzeigeebene angibt, und einem dritten Feld (56) das eine zweite Koordinate (Yai) auf einer Anzeigeebene angibt, übertragen wird.

41. Vorrichtung nach Anspruch 40, **dadurch gekennzeichnet, daß** das erste Feld (52) in wenigstens einem Bit eines Bytes integriert ist, das zum Angeben entweder der ersten oder der zweiten Koordinate (Xai oder Yai) bestimmt ist.

42. Vorrichtung nach einem der Ansprüche 28 bis 41, **dadurch gekennzeichnet, daß** sie eine Einrichtung (22) zum Verwalten von eingangsseitig erhaltenen Pixeln in Gruppen von Pixeln umfaßt, die nacheinander während eines vorbestimmten Erfassungszeitabschnitts (Tab) erhalten werden, und daß zum Verwalten einer ersten Pixelgruppe für eine gegebene Linie mit dem ersten Pixel (P1) eines Anfangslinienelements (T1) die Einrichtung umfaßt:

    a) eine Einrichtung zum eingangsseitigen Festlegen des ersten Pixels als Bezugspixel (Pr) und der weiteren Pixel der Gruppe als Kandidatenpixel bei der Auswahl zur Übertragung,

b) eine Einrichtung zum Bestimmen für jedes aufeinanderfolgende Kandidatenpixel, ob der Abstand zwischen dem Bezugspixel und dem Kandidatenpixel größer als der vorbestimmte Schwellenabstand (Smin) ist,

c) eine Einrichtung zum Eliminieren des Kandidatenpixels, falls der Abstand kleiner als der Schwellenabstand ist,

d) eine Einrichtung zum Auswählen des Kandidatenpixels zur Übertragung und zum Festlegen dieses ausgewählten Kandidatenpixels als neues Bezugspixel, falls der Abstand nicht kleiner als die Schwelle ist, und

e) eine Einrichtung (24) zum gemeinsamen Übertragen des ersten Pixels und des gewählten Kandidatenpixels.

43. Vorrichtung nach einem der Ansprüche 28 bis 42, **dadurch gekennzeichnet, daß** sie eine Einrichtung (22) zum Verwalten der eingangsseitig erhaltenen Pixel in Gruppen von Pixeln umfaßt, die nacheinander während eines vorbestimmten Erfassungszeitabschnitts (Tab) empfangen wurden, und daß zum Verwalten einer einer vorangegangenen Pixelgruppe ohne Unterbrechung der Linie folgenden Pixelgruppe die Einrichtung umfaßt:

a) eine Einrichtung zum eingangsseitigen Festlegen des ersten übertragenen Pixels der vorangegangenen Gruppe als Bezugspixel und der folgenden Gruppenpixel als Kandidatenpixel bei der Auswahl für die Übertragung,

b) eine Einrichtung zum Bestimmen für jedes aufeinanderfolgende Kandidatenpixel, ob der Abstand zwischen dem Bezugspixel und dem Kandidatenpixel größer als der vorbestimmte Schwellenabstand (Smin) ist,

c) eine Einrichtung zum Eliminieren des Kandidatenpixels, falls der Abstand kleiner als der Schwellenabstand ist,

d) eine Einrichtung zum Auswählen des Kandidatenpixels für die Überbragung und zum Festlegen dieses ausgewählten Kandidatenpixels als neues Bezugspixel, falls der Abstand nicht kleiner als der Schwellenabstand ist, und

e) eine Einrichtung zum gemeinsamen Übertragen der ausgewählten Kandidatenpixel der Gruppe mit einem Hinweis, das erste Pixel der Gesamtheit mit dem letzten Pixel der vorangegangenen Gruppe zu verbinden.

44. Vorrichtung nach einem der Ansprüche 28 bis 43, **dadurch gekennzeichnet, daß** sie eine Einrichtung (22) zum Verwalten der eingangsseitig erhaltenen Pixeln in Gruppen von Pixeln umfaßt, die nacheinander während eines vorbestimmten Erfassungszeitabschnitts (Tab) erhalten wurden, wobei diese Einrichtung dann wirksam ist, wenn die Pixelfolge unterbrochen ist, so daß ein einziges Pixel nach Ablauf des letzten Erfassungszeitabschnitts erhalten wird, um das einzige Pixel systematisch zu übertragen.

45. Vorrichtung nach einem der Ansprüche 28 bis 44, **dadurch gekennzeichnet, daß** sie mit einem interaktiven Schirm (6) verbunden ist, der einen Bildschirm und eine in dem Schirm integrierte Vorrichtung zum Erfassen von Koordinaten umfaßt, wobei die eingangsseitig erhaltenen Pixel ausgehend von Positionsdaten, die von der Vorrichtung zum Erfassen von Koordinaten geliefert wurden, erhalten werden und das oder die übertragene(n) Pixel dem Bildschirm geliefert wird (werden).

46. Vorrichtung nach einem der Ansprüche 28 bis 45, **dadurch gekennzeichnet, daß** die zur Übertragung ausgewählten Pixel wenigstens zu einem Empfangsterminal (2) übertragen werden, der von der Quelle (6) der eingangsseitig erhaltenen Pixel entfernt ist.

47. Vorrichtung nach einem der Ansprüche 28 bis 46, **dadurch gekennzeichnet, daß** sie eine Einrichtung zum Senden von übertragenen Pixeln wenigstens zum Empfangsterminal (2) umfaßt, der von der Quelle (6) von eingangsseitig erhaltenen Pixeln entfernt ist.

48. Femschreibvorrichtung (2) mit einer Vorrichtung zum Übertragen von Pixeln nach einem der Ansprüche 28 bis 47.

49. Vorrichtung nach einem der Ansprüche 28 bis 48, **dadurch gekennzeichnet, daß** sie unter anderem eine Einrichtung zum Zwischenschalten wenigstens einer Nachricht mit Daten, die sich von Pixeln (Pi) unterscheiden, zwischen zwei Pixelpakete (MPk) aufweist, wobei das letzte Pixel des einen mit dem ersten Pixel des anderen zu verbinden ist, um eine kontinuierliche Linie anzugeben.

50. Vorrichtung zum Empfangen von selektiv übertragenen Pixeln gemäß einem der Ansprüche 28 bis 49, **dadurch gekennzeichnet, daß** sie umfaßt:

a) eine Einrichtung zum Empfangen jedes übertragenen Pixels;

b) eine Einrichtung, die bei einer Folge von empfangenen Pixeln zur Bestimmung der Pixel ausgelegt ist, die miteinander zu verbinden sind, um eine kontinuierliche Linie zu bilden; und

c) eine Einrichtung, die für jedes zu verbindende Pixel zum Erzeugen eines Strekkensegments bestimmt ist, das dieses Pixel mit dem vorangegangenen Pixel in der Folge verbindet, um eine kontinuierliche Linie zwischen den zu verbindenenden Pixeln zu bilden.

FIG.1

FIG.2

FIG.3

52       54       56

| liaison | Xai | Yai |
|---------|-----|-----|

→ coordonnée Y
→ coordonnée X
→ indicateur de liaison

50

**FIG.4**

60       62

| ordre | | nombre pixels mk | ~ 58 |
|-------|-------|----------------|------|
| liaison | Xa1 | Ya1 | ~ P1 |
| liaison | Xa2 | Ya2 | ~ P2 |
| | | | MPk |
| liaison | Xak | Yak | ~ Pk |

**FIG.5**

| D7 | | | | | | | D0 | |
|---|---|---|---|---|---|---|---|---|
| 0 | 0 | 0 | 1 | np3 | np2 | np1 | np0 | — octet 1 |
| poids faible coordonnée Xa1 | | | | | | | | — octet 2 |
| bl | poids fort coordonnée Xa1 | | | | | | | — octet 3 |
| poids faible coordonnée Ya1 | | | | | | | | — octet 4 |
| ✕ | poids fort coordonnée Ya1 | | | | | | | — octet 5 |
| poids faible coordonnée Xa2 | | | | | | | | — octet 6 |
| ✕ | poids fort coordonnée Xa2 | | | | | | | — octet 7 |
| poids faible coordonnée Ya2 | | | | | | | | — octet 8 |
| ✕ | poids fort coordonnée Ya2 | | | | | | | — octet 9 |
| poids faible coordonnée Xak | | | | | | | | — octet 4k-2 |
| ✕ | poids fort coordonnée Xak | | | | | | | — octet 4k-1 |
| poids faible coordonnée Yak | | | | | | | | — octet 4k |
| ✕ | poids fort coordonnée Yak | | | | | | | — octet 4k+1 |

MPk

## FIG.6

40

FIG.7

E2 — réception informations
détecteur de positions

E4 — conversion
en pixel

E6 — mémorise
pixel

b9

oui — capteur
relevé
? — E8

non

n pixels
acquis
? — oui

b0

E10 —

non

b20 —

B      ⊗      A

**FIG.8**

EP 1 198 786 B1

CS

Ci(Xci,Yci)

PROCESSEUR
APPLICATIONS
22

| CSi | Xai | Yai |
|-----|-----|-----|

| Pn |
|----|
| Pn-1 |

MT1

| P3 |
|----|
| P2 |
| P1 |

**FIG.9**

**FIG.10a**

sélection pixels
R1

Initialise
indice référence r=1
indice évaluation i=2
nombre pixel retenu m=1

E12'

E18''

n = n - 1

E14'

calcul distance
Sri = | Pr - Pi |

incrémente indice
pixel évalué
i = i + 1

E22'

réorganisation
mémoire MT1

E18'

b1'

non

Sri > Smin
?

E16'

b1''

b2'

oui

non

i = n
?

nouveau pixel référence
Pr = Pi
r = i

E26'

E20'

oui

b3'

b1''''

incrémente
nombre pixel retenu
m = m + 1

E28'

i = n
?

non

b4'

oui

E20''

FIG.10b

| Pixel évalué | Pixel réf (valeur r) | Critère d'évaluation | Critère satisfait? | Valeur m | Pixels sélectionnés mémoire MT2 |
|---|---|---|---|---|---|
| P1 | | | | | P1 |
| P2 | P1 | $S_{1,2} > S_{min}$ | NON | 1 | P1 |
| P3 | P1 | $S_{1,3} > S_{min}$ | NON | 1 | P1 |
| P4 | P1 | $S_{1,4} > S_{min}$ | OUI | 2 | P1,P4 |
| P5 | P4 | $S_{4,5} > S_{min}$ | OUI | 3 | P1,P4,P5 |
| P6 | P5 | $S_{5,6} > S_{min}$ | OUI | 4 | P1,P4,P5,P6 |
| P7 | P6 | $S_{6,7} > S_{min}$ | NON | 4 | P1,P4,P5,P6 |
| P8 | P6 | $S_{6,8} > S_{min}$ | OUI | 5 | P1,P4,P5,P6,P8 |
| P9 | P8 | $S_{8,9} > S_{min}$ | NON | 5 | P1,P4,P5,P6,P8 |
| P10 | P8 | $S_{8,10} > S_{min}$ | OUI | 6 | P1,P4,P5,P6,P8,P10 |
| P11 | P10 | $S_{10,11} > S_{min}$ | OUI | 7 | P1,P4,P5,P6,P8,P10, P11 |
| P12 | P11 | $S_{11,12} > S_{min}$ | OUI | 8 | P1,P4,P5,P6,P8,P10, P11,P12 |
| P13 | P12 | $S_{12,13} > S_{min}$ | OUI | 9 | P1,P4,P5,P6,P8,P10, P11,P12,P13 |
| P14 | P13 | $S_{13,14} > S_{min}$ | NON | 9 | P1,P4,P5,P6,P8,P10, P11,P12,P13 |
| P15 | P13 | $S_{13,15} > S_{min}$ | OUI | 10 | P1,P4,P5,P6,P8,P10, P11,P12,P13,P15 |
| P16 | P15 | $S_{15,16} > S_{min}$ | OUI | 11 | P1,P4,P5,P6,P8,P10, P11,P12,P13,P15,P16 |

## FIG.11

## FIG.12a

## FIG.12b

A

| sélection pixels | R1 |

E32 — PMP = 0 ? — non — b6

b5 — oui

E34 — dépositionne message indication liaison pixel

E44 — 1 pixel retenu ? — oui — b8

b7 — non

E46 — positionne message indication liaison pixel

E36 — envoi message Mk pixels

E38 — positionne indicateur PMP = 1

E48 — envoi message Mk-1 derniers pixels — 1er pixel mémorisé non envoyé

E40 — visualise ligne Mk pixels

E42 — place pixel Pk 1ere position zone de mémorisation

⊗

**FIG.13**

**FIG.14**

**B**

b10

non                                      E50

1 pixel
mémorisé
?

b14    oui

b15

PMP = 0
?

E56

non

b16   oui

E64   dépositionne message
indication liaison pixel

positionne message
indication liaison pixel   E58

E66   envoi message
1 pixel

envoi message
1 pixel   E60

positionne indicateur
PMP = 0   E52"

E68   visualise pixel

visualise ligne
2 pixels   E62

1ere position libre
zone de mémorisation   E54'

C

⊗

**FIG.15**

FIG.16

```
            ┌──────────────────────┐
            │      réception       │
            │   message pixels     │
            └──────────────────────┘
                       │
            ┌──────────────────────┐
            │      détection       │ ～ E80
            │   message pixels     │
            └──────────────────────┘
                       │
            ┌──────────────────────┐
            │    prend nombre      │ ～ E82
            │   pixels reçus       │
            └──────────────────────┘
                       │
    b23                ◇
  oui   ╱───────────  liaison   ───╲  E84
 ◄──────   positionné ?
                       │ non
                 b20 ～ │
            ┌──────────────────────┐
            │    range pixel(s)    │ ～ E86
            │        début         │
            │  zone mémorisation   │
            └──────────────────────┘
                       │
   E88 ～    ╱─── 1 pixel reçu ? ───╲  non   b21
            ╲──────────────────────╱ ─────────────►
         b22 ～ │ oui                     ┌──────────────────────┐
                │                    E90 ～│   visualise ligne    │
  E94 ～ ┌──────────────────────┐         │  reliant les pixels  │
        │   visualise pixel    │         │  zone mémorisation   │
        └──────────────────────┘         └──────────────────────┘
                │                                  │
                │                    E92 ～┌──────────────────────┐
                │                         │ place dernier pixel reçu│
                │                         │        début         │
                │                         │  zone mémorisation   │
                │                         └──────────────────────┘
    ⊙ D        ⊗ ◄──────────────────────────────────┘
```

**FIG.17**

D

range pixel(s)
2eme position        E96
zone mémorisation

E98    1 pixel reçu    non    b24
?

b25    oui

E100    visualise droite
reliant les 2 pixels
zone mémorisation

visualise ligne
reliant les pixels        E90'
zone mémorisation

E102    place pixel reçu
début
zone mémorisation

place dernier pixel reçu        E92'
début
zone mémorisation

⊗

**FIG.18**